# FASCICULE DE BREVET EUROPEEN

(11) **EP 3 463 981 B1**
(45) Date de publication et mention de la délivrance du brevet: **21.07.2021**
(21) Numéro de dépôt: 17732505.7
(22) Date de dépôt: 24.05.2017
(51) Int. Cl.: B60Q 3/208

(54) **TOIT VITRE FEUILLETE LUMINEUX DE VEHICULE, VEHICULE L'INCORPORANT ET FABRICATION**
VERBUNDGLASSCHIEBEDACH EINES FAHRZEUGS, FAHRZEUG DAMIT UND HERSTELLUNG DAVON
LAMINATED GLASS SUNROOF OF A VEHICLE, VEHICLE COMPRISING SAME, AND PRODUCTION THEREOF

(30) Priorité: 26.05.2016 FR 1600852
(43) Date de publication de la demande: 10.04.2019
(73) Titulaire: SAINT-GOBAIN GLASS FRANCE, 92400 Courbevoie (FR)
(72) Inventeur: BERARD, Mathieu, 75019 Paris (FR); DELRIEU, Olivier, 91360 Epinay Sur Orge (FR); BAUERLE, Pascal, 80700 Roye (FR)
(74) Mandataire: Saint-Gobain Recherche
(86) Numéro de dépôt international: PCT/FR2017/051294
(87) Numéro de publication internationale: WO 2017/203175

(56) Documents cités:
- WO-A1-2013/110885
- WO-A1-2016/001508
- FR-A1- 2 997 648
- US-A1- 2015 151 675

## Description

L'invention concerne un toit vitré feuilleté lumineux de véhicule ainsi qu'un véhicule comportant un tel toit et la fabrication d'un tel toit.

Il existe de plus en plus de toits automobiles vitrés, certains capables d'apporter la lumière d'ambiance. La lumière provient directement des diodes électroluminescentes insérées au sein du vitrage feuilleté.

Plus précisément le document WO2013189794 dans le mode de réalisation en relation avec la figure 1, comporte un toit automobile vitré lumineux comprenant :
- un vitrage feuilleté comportant :
   - un premier vitrage formant vitrage extérieur avec des première et deuxième faces principales souvent appelées F1 et F2
   - un intercalaire de feuilletage sous forme de trois feuillets de PVB
   - un deuxième vitrage formant vitrage intérieur avec des troisième et quatrième faces principales souvent appelées F3 et F4
      les deuxième et troisième faces étant les faces internes du vitrage
- un ensemble de diodes sur un support mince qui est une lame de verre comportant un circuit d'alimentation électrique en couche d'oxyde conducteur
- chaque diode ayant une face émettrice émettant en direction du verre intérieur,
- le feuillet central de l'intercalaire de feuilletage ayant une ouverture traversante ménagée tout autour de la lame de verre pour son intégration. Le document FR 2 997 648 divulgue de plus des éléments focalisant dans le feuilletage.

Le taux de rebut de ce vitrage peut être amélioré et par la même le cout de fabrication réduit. L'invention vise un toit vitré plus robuste, voire même plus compact et/ou simple à fabriquer sans sacrifier les performances optiques.

A cet effet, la présente demande a pour premier objet un toit vitré feuilleté lumineux de véhicule notamment automobile ou encore de transport en commun comprenant :
- un vitrage feuilleté comportant :
   - un premier vitrage (transparent), en verre minéral, éventuellement clair, extraclair ou de préférence teinté notamment gris ou vert, de préférence bombé, destiné à être le vitrage extérieur, avec des première et deuxième faces principales respectivement dites face F1 et face F2, pour le véhicule automobile, d'épaisseur de préférence d'au plus 2,5mm, même d'au plus 2,2mm - notamment 1,9mm, 1,8mm, 1,6mm et 1,4mm- ou même d'au plus1,3mm ou d'au plus 1mm
- un deuxième vitrage (transparent), en verre minéral, de préférence bombé et de préférence clair ou extraclair voire teinté (moins que le premier vitrage), vitrage destiné à être le vitrage intérieur, avec des troisième et quatrième faces principales respectivement face F3 et face F4, pour le véhicule automobile, d'épaisseur de préférence inférieure à celle du premier vitrage, même d'au plus 2mm - notamment 1,9mm, 1,8mm, 1,6mm et 1,4mm- ou même d'au plus 1,3mm ou de moins de 1,1mm ou encore de moins de 0,7mm notamment d'au moins 0,2mm, l'épaisseur totale des premier et deuxième vitrages étant de préférence strictement inférieure à 4mm, même à 3,7mm, le deuxième vitrage pouvant être trempé chimiquement entre les faces F2 et F3 qui sont les faces internes du vitrage feuilleté un (film) intercalaire de feuilletage (transparent), éventuellement clair, extraclair ou même teinté notamment gris ou vert (teinté surtout si à ouvertures traversantes), en matière polymérique de préférence thermoplastique et mieux encore en polyvinylbutyral (PVB), film intercalaire de feuilletage (feuillet unique, feuillet composite) ayant une face principale FA côté face F2 et une face principale FB côté face F3, la face FA pouvant être en contact adhésif avec la face F2 (nue ou revêtue d'un revêtement) et la face FB être en contact adhésif avec la face F3 (nue ou revêtue d'un revêtement), intercalaire de feuilletage d'épaisseur E_{A} entre la face FA et FB -qui pour le véhicule automobile-est de préférence d'au plus 1,8mm, mieux d'au plus 1,2mm et même d'au plus 0,9mm (et mieux d'au moins 0,3mm et même d'au moins 0,6mm), notamment en retrait du chant du premier vitrage d'au plus 2mm et en retrait du chant du deuxième vitrage d'au plus 2mm, notamment étant un premier feuillet acoustique et/ou teinté
- un ensemble de N>1 diodes électroluminescentes inorganiques, chaque diode comportant au moins une puce semi-conductrice de préférence dans une enveloppe (packaging) chaque puce étant (ayant au moins une face émettrice) apte à émettre en direction de la face F3, et chaque diode ayant notamment une tranche et une surface avant (dans le plan de la face avant du packaging) et même de préférence diode ayant une largeur W4 (dimension maximale normale à l'axe optique) d'au plus 10mm et même d'au plus 8mm mieux la largeur de l'ensemble diode et éventuelle optique de collimation et d'au plus 15mm et même d'au plus 8mm, chaque diode étant d'épaisseur e2 submillimétrique et supérieure à 0,2mm - mieux l'épaisseur de l'ensemble diode et optique de collimation étant notamment supérieure à 0,2mm et de préférence submillimétrique.
Ledit intercalaire de feuilletage est pourvu entre la face FA et la face FB d'une ou d'un ensemble de M ouvertures qui sont de préférence traversantes ou formant trous borgnes, chaque ouverture étant de largeur W_{A} (supérieure ou égale à l'ensemble diode et optique de collimation éventuelle dans l'ouverture) d'au plus 20mm et même d'au plus 15mm.

Chaque diode est associée à une ouverture traversante ou un trou borgne logeant (entourant la tranche de) la diode et même logeant (tout ou partie) d'une optique de collimation ou au moins un groupe desdites diodes est associée à une même ouverture traversante dite commune ou un trou borgne dit commun, logeant le groupe de diodes même logeant (tout ou partie) d'une optique de collimation notamment commune.
En particulier :
- lorsque l'ouverture est traversante et la face FB en contact avec la face F3, la surface avant de) la diode est en retrait de préférence de la face F3
- lorsque l'ouverture est traversante, lorsqu'une diode est en montage inversé et la face FA est en contact avec la face F3, la diode est de préférence en retrait de la face F2 (de la face FA),
- lorsque le trou est borgne l'épaisseur restante dite de fond Hf et d'au plus 0,3mm et/ou d'au moins 0,1mm ou 0,2mm.

Des diodes dudit ensemble de diodes, voire toutes les diodes peuvent être sur la face F2 notamment pourvue d'une couche électronconductrice (de préférence transparente) en deux ou plus zones isolées pour la connexion électrique des diodes par une ou des bandes isolantes notamment de largeur submillimétrique, il peut s'agir d'une couche électroconductrice couvrant la face F2 et ayant une fonction en outre de couche de contrôle solaire et/ou chauffante, ou encore de pistes électroconductrices (locales) ou sur la face avant d'un support flexible dit support de diode(s) d'épaisseur e'2 submillimétrique de préférence d'au plus ou inférieure à 0,2mm, entre la face FA et la face F2
et/ou des diodes dudit ensemble de diodes sont à montage inversé sur la face F3 notamment pourvue d'une couche électronconductrice (de préférence transparente) en deux ou plus zones isolées pour la connexion électrique des diodes par une ou des bandes isolantes notamment de largeur submillimétrique, il peut s'agir d'une couche électroconductrice couvrant la face F3 et ayant une fonction en outre de couche de contrôle solaire et/ou chauffante, ou encore de pistes électroconductrices (locales) ou sur la face arrière d'un support flexible dit support de diode(s) d'épaisseur e'2 submillimétrique et de préférence d'au plus à 0,2mm entre la face FB et la face F3.

Aussi, la présente invention propose des découpes locales de l'intercalaire de feuilletage dédiées aux diodes. En particulier, on évite la découpe totale tout autour du support de diode(s) (carte PCB ou carte de circuit imprimé) comme pratiqué dans l'art antérieur augmente le risque de mauvais assemblage (bulles, délamination, défauts esthétiques). En particulier le support de diode est assez mince pour ne pas ajouter obligatoirement un feuillet type PVB côté arrière. Le groupe de diodes dans un trou commun peut être inscrit sur une surface S de largeur ou longueur d'au plus 20mm.

L'intercalaire de feuilletage est de préférence au plus près des diodes et de préférence en tenant compte de la tolérance de positionnement des diodes lors de la découpe choisie de préférence plus large que la largeur des diodes (même si l'intercalaire a de la souplesse).

Le toit vitré comporte en outre un ensemble d'optiques de collimation, chaque optique de collimation étant associée à une diode électroluminescente, dite diode dédiée, dans l'ouverture de préférence traversante ou à un groupe de diodes électroluminescentes qui sont dans l'ouverture commune de préférence traversante chaque optique de collimation (en matière transparente), est agencée entre les faces F2 et F3, avec au moins une partie fonctionnelle entre la surface avant de la diode et la face F3.

L'optique de collimation permet d'augmenter la lumière et/ou de mieux gérer la lumière par zone de lecture entre passager arrière ou avant
L'ouverture, de préférence traversante, de l'intercalaire de feuilletage facilite sa mise en place, son intégration et améliore ses performances.
Contre toute attente dans le cas d'un ouverture traversante l'intercalaire ne flue pas assez pour gêner le fonctionnement de l'optique de collimation.

La ou les optiques de collimations présentent une face de sortie de la lumière émise par les diodes. La ou les optiques de collimations sont transparentes, (ne sont pas des réflecteurs), sont traversés par la lumière émise par les diodes.

De préférence :
- le demi angle d'émission des diodes (en sortie de la surface avant) est de préférence d'au moins 50°
- l'angle de vue, en sortie de chaque optique de collimation, est d'au plus 40 (°).

De préférence au moins une ou chaque optique de collimation (avec une plaque texturée) comporte :
- a) un réseau de motifs bidimensionnels, côté face de sortie, notamment comportant une base et un sommet, en pointe ou en arête, sommet éventuellement tronqué, base avec un facteur de forme longueur sur largeur d'au plus10 même d'au plus 5 et même d'au plus 2 ou
- b) un ensemble prismatique comportant un premier réseau prismatique, l'ensemble des motifs du premier réseau étant de prismes côté face F3 s'étendant longitudinalement suivant une direction parallèle ou formant un angle d'au plus 10° voire d'au plus 5° et même d'au plus 2° avec la tranche longitudinale du toit (à l'axe de la voiture), et un deuxième réseau prismatique croisé avec le premier réseau prismatique, l'ensemble des motifs du deuxième réseau sont des prismes côté face F3 s'étendant longitudinalement suivant une direction perpendiculaire avec l'axe longitudinal du premier réseau prismatique ou formant un angle d'au plus de 90±10° voire d'au plus 90±5° et même de 90±2°.De préférence, au moins une ou chaque optique de collimation selon a) comporte une plaque plane fonctionnelle partiellement texturée dans son épaisseur, dite plaque texturée, qui comporte une face d'entrée orientée vers la face F2 en regard de la diode dans l'ouverture de préférence traversante ou du groupe de diodes dans l'ouverture commune de préférence traversante et une face de sortie orientée vers la face F3, texturation formant ensemble de motifs de hauteur submillimétrique (inférieure à EA de préférence).

De préférence, au moins une ou chaque optique de collimation selon b) comporte :
- une première plaque plane fonctionnelle partiellement texturée dans son épaisseur, dite première plaque texturée, qui comporte une face d'entrée orientée vers la face F2 en regard de la diode dans l'ouverture de préférence traversante ou du groupe de diodes dans l'ouverture commune de préférence traversante et une face de sortie texturée orientée vers la face F3, texturation formant ensemble desdits motifs (du premier réseau prismatique) de hauteur submillimétrique (inférieure à EA de préférence).
- une deuxième plaque plane fonctionnelle partiellement texturée dans son épaisseur, dite deuxième plaque texturée, qui comporte une face d'entrée orientée vers la face de sortie de la première plaque, vers la face F2 en regard de la diode dans l'ouverture de préférence traversante ou du groupe de diodes dans l'ouverture commune de préférence traversante, et une face de sortie orientée vers la face F3, texturée, texturation formant ensemble desdits motifs (du deuxième réseau prismatique) de hauteur submillimétrique (inférieure à EA de préférence).La (première et même deuxième) plaque texturée est de largeur supérieure ou égale à la largeur de la surface avant de la diode (zone utile) dans l'ouverture de préférence traversante ou du groupe de diodes dans l'ouverture commune de préférence traversante.

La face d'entrée (de la première plaque) est de préférence espacée de la face avant de la diode dans l'ouverture de préférence traversante ou du groupe de diodes dans l'ouverture commune de préférence traversante.

De préférence l'ensemble hauteur de diode/ lame d'air d'entrée et de sortie/ première et même deuxième plaque texturée est d'au plus 1mm même 0,9mm.

La (première et même deuxième) plaque plane texturée comporte avantageusement une pluralité de motifs géométriques constitués de surfaces planes ou courbes. Il s'agit de préférence de motifs géométriques répétitifs, c'est-à-dire des motifs géométriques ayant sensiblement la même forme et placés sensiblement à égale distance les uns des autres.

Bien entendu, la forme de la zone couverte par la (première et même deuxième) plaque plane texturée est indépendante de la forme des motifs.

La hauteur de la (première et même deuxième) plaque texturée est comprise entre 5 µm et 1 mm, de préférence entre 10 µm et 500µm, en particulier entre 20 et 300 µm, de préférence d'au moins 50µm et d'au plus 200µm.

La (première et même deuxième) plaque texturée a une faible rugosité de façon à éviter toute diffusion. Indépendamment de la rugosité, on peut définir une hauteur ou profondeur de texturation qui est égale à la distance entre le point le plus haut et le plus bas d'un motif.

Les motifs ont pour dimension environ de 10µm à 500 µm et mieux entre 100 et 300 µm, de préférence d'au moins 50µm.

La (première et même deuxième) plaque texturée présente une texturation partielle dans son épaisseur, autrement dit avec une épaisseur constante entre la face lisse et le point le plus proche de la face texturée. De préférence on définit l'épaisseur restante (constante) de plaque comme la distance entre le point le plus bas entre la face texturée (face d'entrée si réseau de prismes) et la face opposée (face d'entrée si réseau de prismes). L'épaisseur restante est au moins 50µm et même d'au plus 200µm.

La (première et même deuxième) plaque texturée (et même une pièce la portant) peut être en un polymère thermoplastique tel qu'un polyuréthane ou un polycarbonate (PC) ou un polyméthacrylate de méthyle (PMMA). Il peut s'agir d'une pièce moulée en PMMA, en PC. La texturation peut être réalisée par laminage (« cast » en anglais), thermoformage, gravure, notamment une gravure au laser pour un matériau polymère. Suivant la forme de la texturation visée, ce procédé peut ne pas forcément mener à des formes géométriques parfaites : sommet, arête arrondis.

De préférence, les motifs sont le plus proche possible les uns des autres, et ont par exemple leurs bases distantes de moins de 1mm, et de préférence de moins de 0,5mm.

De manière encore préférée, les motifs sont jointifs ou essentiellement jointifs. Des motifs sont dit jointifs lorsqu'ils se touchent en au moins une partie de leur surface. On préfère que les motifs soient jointifs car ainsi la surface de la (première et même deuxième) plaque est plus texturée. Certains motifs ne permettent pas une jonction totale entre les motifs. C'est notamment le cas lorsque si les base sont de cercles même se touchent, il reste une certaine surface entre les cercles n'appartenant pas aux motifs. Par jonction totale, on entend le fait que le contour de la base d'un motif fait également entièrement partie des contours de ses motifs voisins.

Certains motifs peuvent être totalement jointifs, de sorte que l'intégralité de la surface de la plaque fasse partie d'au moins un motif. Il s'agit de motif de pavage. En particulier, des motifs à base carrée ou rectangulaire ou hexagonale peuvent être totalement jointifs si elles les bases sont identiques. Dans le cas de bases carrées ou rectangulaires, il convient également que lesdites bases soient alignées pour que les motifs soient totalement jointifs. Dans le cas de bases hexagonales, il convient que lesdites bases forment un nid d'abeille.

Avantageusement, au moins une ou chaque optique de collimation est une pièce de préférence monolithique (pour a)) ou en plusieurs morceaux (deux par exemple, notamment deux plaques texturées) solidaires dans l'ouverture de préférence traversante, et est montée sur le support de diodes dans l'ouverture de préférence traversante éventuellement commune ou monté sur la diode ou le groupe de diodes, comportant :
- la partie fonctionnelle de l'optique de collimation notamment une (première) plaque texturée et une éventuelle deuxième plaque texturée (pour b)),
- une extension périphérique (un retour), notamment de la (première) plaque texturée, en direction de la face F2 le long de la tranche (de l'enveloppe) de la diode ou d'au moins une des diodes du groupe de diodes, notamment de largeur W d'au plus 1,5mm, d'au moins 0,1mm et mieux d'au moins 0,5mm, et même en contact avec ladite tranche et mieux espacée d'au plus 2mm ou en contact de l'intercalaire de feuilletage (avec paroi formant l'ouverture de préférence traversante).

L'extension périphérique -hors de la zone texturée fonctionnelle- peut présenter des faces lisses ou texturées.

L'extension périphérique peut avoir une face en regard de la face F3 qui est en saillie de la face de sortie texturée (pour laisser une lame d'air de sortie, par exemple une surépaisseur).

L'extension périphérique peut avoir une face en regard de la face F3 qui est dans le plan du point le plus haut de la face de sortie texturée. La face de sortie texturée et/ou l'extension périphérique étant en contact ou de préférence en retrait de la face F3 en particulier si motifs en relief.

L'extension périphérique et/ou la (première) plaque texturée et même la deuxième plaque texturée (pour b)) peut être entièrement logée dans l'ouverture de préférence traversante et éventuellement commune. L'extension périphérique et/ou la plaque texturée ne fait pas saillie de la face FB.

L'extension périphérique peut être sous forme d'au moins un pied de fixation (la pièce de section en L), de préférence d'au moins deux pieds de fixation (la pièce est de section en U) :
- fixation de l'optique de collimation sur la diode, le ou les pieds de fixation étant de part et d'autre de la tranche de la diode, espacés du ou sur le support de diodes, fixation par montage en force ou par collage de préférence en dehors de la surface avant de la diode ou du groupe de diodes (pour garder une lame d'air d'entrée),
- fixation de l'optique de collimation sur chaque diode du groupe de diodes le ou les pieds de fixation étant de part et d'autre de la tranche de la diode, espacés ou en contact avec le support de diodes, fixation par montage en force ou par collage de préférence en dehors de la surface avant de la diode ou du groupe de diodes (pour garder une lame d'air d'entrée),
- fixation de l'optique de collimation sur le support de diodes.

L'extension périphérique forme de préférence un entourage de la diode dans l'ouverture de préférence traversante ou du groupe de diodes dans l'ouverture commune de préférence traversante. La pièce est de section U.

L'entourage présente de préférence un logement d'accueil de la diode ou du groupe de diodes notamment la paroi de l'entourage comporte des ergots de maintien de la diode ou du groupe de diodes, ergots de préférence régulièrement répartis, de préférence au moins deux ergots.

La hauteur de l'extension (entourage) est de préférence à une distance d'au plus 0,3 mm, voire de préférence d'au plus 0,1mm de la face FB.

Dans un mode de réalisation alternatif au montage sur diode ou sur un support de diodes, l'optique de collimation selon a) peut être un film transparent texturé entre la face F3 et l'intercalaire de feuilletage avec le ou les ouvertures de préférence traversantes. L'optique de collimation (selon a) est alors commune à l'ensemble des diodes.

Chaque film transparent texturé couvrant la zone avec l'ensemble des diodes et peut être texturé par régions, donc porteur d'une ou des régions texturées, chacune en vis-à-vis d'une diode ou dugroupe de diodes et les régions adjacentes sont lisses (pour laisser de la transparence).

Le film transparent texturé peut être un film en matière plastique (polymère organique), de préférence en poly(éthylène téréphtalate), polycarbonate, poly(méthacrylate de méthyle), polystyrène.

L'optique de collimation selon b) peut être un premier film transparent texturé et un deuxième film transparent texturé (croisé) entre la face F3 et l'intercalaire de feuilletage avec le ou les ouvertures de préférence traversantes. L'optique de collimation est alors commune à l'ensemble des diodes. Le film transparent texturé couvrant la zone avec l'ensemble des diodes et peut être texturé par régions, donc porteur d'une ou des régions texturées, chacune en vis-à-vis d'une diode ou des groupes de diodes et les régions adjacentes sont lisses (pour laisser de la transparence).

Toutefois on préfère une solution avec un ensemble d'optiques de collimation monté dans les ouvertures de préférence traversantes.

De préférence :
- les diodes avec leurs optiques de collimations (a) ou b)) sont dans des ouvertures (de préférence) traversantes ou borgnes d'un PVB ou dans des ouvertures traversantes ou borgnes d'un PVB/film fonctionnel avec un éventuel revêtement fonctionnel/PVB
- ou l'ouverture (de préférence) traversante ou borgne est commune aux diodes du groupe de diodes et une partie de l'optique de collimation (a) ou b), notamment première plaque ou film texturée) forme un espaceur entre les diodes ou un espaceur entre les diodes est une pièce distincte de l'optique de collimation (a) ou b, notamment sur la première plaque ou film texturé).

Les diodes du groupe de diodes sont par exemple espacées d'au plus 0,5mm ou l'espace interdiode comporte un espaceur transparent.

La largeur de la diode (définie par le packaging éventuel) est d'au plus 15mm et même d'au plus 10mm, par exemple diamètre ou longueur (dimension maximale).

La base des motifs est de préférence parallèle à la face émettrice.

La hauteur tronquée des motifs est d'au plus 10% de la valeur du pas de la texture.Les motifs (de la première plaque et/ou de la deuxième plaque texturée) peuvent être :
- convexes, c'est-à-dire venant en excroissance par rapport au plan général de la face texturée de la plaque,
- concaves, c'est-à-dire venant en creux dans la masse de la plaque.

Les motifs bidimensionnels sont de préférence des cônes, de révolution ou pyramidaux, ayant ses demi-angles au sommet non-nuls, les motifs bidimensionnels ou prismes ayant un demi-angle au sommet qui va de 35 à 55°, 40 à 50°, mieux de 45°.

La base des motifs bidimensionnels est par exemple polygonale, carrée ou rectangulaire ou hexagonale, triangulaire, même ronde : circulaire ...

Le plus petit cercle pouvant contenir la base des motifs peut s'inscrire dans un cercle de diamètre d'au maximum 2 fois la hauteur du motif.

Un motif peut être :
- en relief, donc plein,
- en creux (autrement dit inversé), les parois d'une cavité formant la ou les surfaces dont le sommet (l'arête) est orienté vers la face F2 et la surface haute de la cavité définissant le contour de la base.
Et le motif bidimensionnel peut être :
- motif en relief, donc plein, par exemple avec une surface conique, notamment des faces latérales séparées par des arêtes,
- motif en creux (autrement dit inversé), les parois d'une cavité formant la ou les surfaces coniques dont le sommet est orienté vers la face F2 et la surface haute de la cavité définissant le contour de la base
De préférence, le motif bidimensionnel présente des faces (latérales) planes d'une pyramide. Un cône classique ne présente pas de surface plane. Les motifs bidimensionnels se terminent par exemple en pointe, comme c'est le cas pour un cône ou une pyramide, c'est-à-dire que le point du motif le plus éloigné du plan général de la plaque est le sommet d'une pointe.Si le motif bidimensionnel est une pyramide régulière, la base (comprise dans le plan général de la face texturée de la plaque) est un triangle équilatéral.

Une diode peut être de type « chip on board » (en anglais) ou encore tout préférentiellement un composant monté en surface (SMD en anglais) comportant alors une enveloppe périphérique (souvent dénommée « packaging »).

Dans un mode de réalisation préféré, chaque diode, de préférence de puissance, étant un composant électronique incluant au moins une puce semi-conductrice, et est équipée d'une enveloppe périphérique (souvent dénommée « packaging »), notamment polymérique ou céramique, encapsulant la tranche du composant électronique (et définissant la tranche de la diode), (en saillie et en) entourant la puce semi-conductrice.

L'enveloppe peut correspondre à l'épaisseur maximale (hauteur) e2 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase porteuse de la puce et une partie formant réflecteur évasée en s'éloignant de l'embase plus haute que la puce, et contenant une résine de protection et/ une matière à fonction de conversion de couleur. On peut définir la surface avant comme la surface de cette matière couvrant la puce en retrait ou au niveau de la surface « avant» du réflecteur.

De préférence la ou les diodes sont des composants montés en surface sur la face avant du support de diode(s) et même la ou les diodes ont une émission lambertienne ou quasi lambertienne.

Dans un mode de réalisation préféré, l'épaisseur, de préférence de PVB, entre face FA et face FB va de 0,7 à 0,9mm (un feuillet unique ou un premier et deuxième feuillet) est en PVB, les diodes sont des composants montés en surface sur la face avant du support de diode(s), e'2 est d'au plus 0,2mm mieux d'au plus 0,15mm et même d'au plus 0,05mm.

La largeur du support de diode(s) tel que la carte à circuit imprimé (PCB en anglais) est de préférence d'au plus 5cm, mieux d'au plus 2cm, et même d'au plus 1cm. La largeur (ou longueur) d'une diode avec une seule puce semi conductrice, généralement diode de forme carrée, est de préférence d'au plus 5mm. La longueur d'une diode avec une pluralité des puces semi- conductrices (typiquement entourées par l'enveloppe), généralement de forme rectangulaire, est de préférence d'au plus 20mm mieux d'au plus 10mm.

Notamment dans le cas d'un feuillet unique -avec les ouvertures traversantes-notamment un PVB éventuellement acoustique, teinté ou clair), la support de diode(s) suffisamment souple pour s'adapter au vitrage feuilleté bombé) peut être collé ou plaqué contre la face F2 ou la face F3 en montage inversé, e'2 est d'au plus 0,15mm et même d'au plus 0,1mm, notamment collage par un adhésif (colle ou de préférence adhésif double face), d'épaisseur e3 avec e3≤0,1mm, mieux e3≤0,05mm -même tel que e3+e'2 est d'au plus 0,15mm mieux d'au plus 0,1mm.

Avec cet adhésif on préfère e3+et2≤e1 (surtout si présent en face arrière du PCB dans la zone des diodes).

Le collage est sur toute la longueur du support ou ponctuel, dans zone à diodes et/ou hors diodes. L'adhésif en périphérie peut faire une étanchéité à l'eau liquide.

Le support de diode(s) peut être local et éventuellement avec des ouvertures traversantes pour le rendre plus discret.

Le toit peut comprendre un feuillet, en particulier de l'intercalaire de feuilletage, en matière thermoplastique entre la face arrière du support de diode(s) et la face F2 ou la face F3 en montage inversé

L'intercalaire de feuilletage formé à partir d'un ou plusieurs films -entre la face FA et FB et/ou feuillet en face arrière et/ou encore feuillet entre la face FB et la face F3- peut être en en polyvinylbutyral (PVB), en polyuréthane (PU), en copolymère éthylène/acétate de vinyle (EVA), ayant par exemple une épaisseur entre 0,2mm et 1,1mm.

On peut choisir un PVB classique comme le RC41 de Solutia ou d'Eastman.

L'intercalaire de feuilletage entre la face FA et FB et/ou feuillet en face arrière et/ou encore feuillet entre la face FB et la face F3-peut comprendre au moins une couche dite centrale en matériau plastique viscoélastique aux propriétés d'amortissement vibro-acoustique notamment à base de polyvinylbutyral (PVB) et de plastifiant, et l'intercalaire, et comprenant en outre deux couches externes en PVB standard, la couche centrale étant entre les deux couches externes. Comme exemple de feuillet acoustique on peut citer le brevet EP0844075. On peut citer les PVB acoustiques décrits dans les demandes de brevet WO2012/025685, WO2013/175101, notamment teinté comme dans le WO2015079159.

De préférence, le toit présente l'une au moins des caractéristiques suivantes
- l'ouverture (individuelle ou commune) de préférence traversante est dans une épaisseur de PVB (un ou plusieurs feuillets, avec interface discernable notamment)
- l'ouverture (individuelle ou commune) de préférence traversante est dans un intercalaire de feuilletage acoustique, en particulier tricouche ou quadricouche
- l'ouverture (individuelle ou commune) de préférence traversante est dans un intercalaire de feuilletage teinté (notamment masquant un peu le support de diode(s
- l'ouverture (individuelle ou commune) est dans une matière composite (multifeuillets) : PVB/film plastique transparent ou encore PVB/film plastique transparent/PVB, ledit film plastique, notamment un PET, d'épaisseur submillimétrique et même d'au plus 0,2mm, ou d'au plus 0,1mm étant porteur d'un revêtement fonctionnel :basse émissivité ou de contrôle solaire et/ou encore chauffant
- l'espacement entre ouvertures traversantes (individuelles) est d'au moins 0,1 mm ou mieux d'au moins 0,2mm et de préférence d'au plus 50cm pour une fonction liseuse
- l'espacement entre diodes d'ouvertures traversantes distinctes (individuelles) d'au moins 0,1 mm ou mieux d'au moins 0,2mm
- l'espacement entre diodes dans une ouverture traversante ou commune est d"au moins 0,1 mm ou mieux d'au moins 0,2mm et d'au plus 1mm.

Naturellement, la face FB ou un autre feuillet de PVB peut être en contact direct avec la face F3 (respectivement F2) ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

Le verre de préférence interne, notamment mince d'épaisseur de moins de 1,1mm, de préférence trempé chimiquement. Il est de préférence clair On peut citer les exemples des demandes WO2015/031594 ou WO2015066201.

Les diodes sont de préférence des diodes de puissance qui sont en fonctionnement sous alimentées électriquement en courant, de préférence avec un facteur d'au moins 10 et même d'au moins 20 (donc intensité /10 voire intensité/20) notamment de façon à maintenir une température inférieure à la température de ramollissement du matériau polymérique de l'intercalaire de feuilletage, en particulier d'au plus 130°C, mieux d'au plus 120°C et même d'au plus 100°C.

Ces diodes garantissent une excellente efficacité sans trop chauffer.

Par exemple pour des diodes alimentées en courant à 1A on choisit entre 50 et 100mA.

Les diodes inorganiques sont par exemple à base de phosphure de gallium, de nitrure de gallium, de gallium et d'aluminium.

Le support de diode(s) (carte PCB) peut être suffisamment souple (flexible) pour s'adapter aux courbures du vitrage feuilleté bombé.

Dans un mode de réalisation, le support de diode(s) comporte un film en matière plastique de préférence transparent, de préférence en poly(éthylène téréphtalate) ou PET ou en polyimide, pourvue de pistes conductrices, notamment métalliques (cuivre etc) ou en oxyde conducteur transparent, de préférence transparentes et équipée des diodes montées en surface. Les pistes conductrices sont imprimées ou déposées par toute autre méthode de dépôt par exemple dépôt physique en phase vapeur. Les pistes conductrices peuvent aussi être des fils. On préfère que les pistes conductrices et le film soient transparents lorsqu'ils sont visibles c'est-à-dire qu'ils ne sont pas masquées par un élément (couche) de masquage (tel qu'un émail voire une peinture etc) notamment en face F4 ou F3. Les pistes conductrices peuvent être transparentes de par la matière transparente ou par leur largeur suffisamment fine pour être (quasi) invisibles.

Des films de polyimide ont une tenue en la température plus élevée par rapport à l'alternative PET ou même PEN (poly(naphtalate d'éthylène).

Le support de diode(s) peut être local par exemple couvrir au plus 20% ou au plus 10% de la surface du vitrage feuilleté) ou couvrir essentiellement les faces F2 et F3 et de préférence étant porteur d'un revêtement fonctionnel basse émissivité ou de contrôle solaire et/ou encore chauffant.

De préférence, le support de diode(s) seul ou associé à un connecteur plat s'étend au moins jusqu'à la tranche du vitrage feuilleté, et de préférence dépasse de la tranche, par exemple le support de diode(s) comporte avec une première partie avec la ou les diodes et une partie moins large débouchant du vitrage, et entre la face arrière du support de diode(s) et la face F2, est logé un adhésif étanche à l'eau liquide d'épaisseur d'au plus 0,1mm et mieux d'au plus 0,05mm, notamment un adhésif double face. On préfère un tel adhésif à une solution de surmoulage. Il peut s'agir de l'adhésif de préférence transparent utilisé pour fixer (tout) le support de diode(s).

Le support de diode(s) peut comporter :
- une première partie (rectangulaire) porteuse de la ou des diodes
- et une deuxième partie pour la connectique (rectangulaire) débouchant et même dépassant sur la tranche du vitrage feuilleté.

Cette deuxième partie peut être (beaucoup) plus longue que la première partie et/ou moins large que la première partie. Le support de diodes peut comporter une première partie porteuse des diodes qui est évidée (pour être plus discret).

De préférence, la première partie est d'au moins large de 2mm. Le support de diode(s) peut être en forme coudée notamment en L

Le support de diode(s) peut être associé à un connecteur plat s'étendant jusqu'à la tranche du vitrage et même la dépassant. On préférence un connecteur flexible s'adaptant à la courbure du vitrage, comportant un plastique par exemple PEN, polyimide. le connecteur plat peut être de largeur (dimension le long de la tranche) inférieure ou égale à la dimension du support de diode(s) le long de la tranche

Le vitrage peut comporter plusieurs groupes de diodes (et donc d'ouvertures de préférence traversantes) avec la même fonction ou des fonctions distinctes.

Les diodes (sur un support de diode(s)) peuvent émettre la même lumière ou une lumière de couleurs différente, de préférence pas en même temps.

Pour avoir une surface lumineuse plus grande et/ou des couleurs différentes on peut avoir -sur un même support de diode(s)- plusieurs rangées de diodes voire encore accoler deux support de diode(s) (au moins accoler les premières parties des supports de diode(s) avec diodes).

De préférence, ledit ensemble des diodes du toit vitré (de véhicule routier de préférence) formant l'une au moins des zones lumineuses suivantes:
- une zone lumineuse formant liseuse ou un éclairage d'ambiance, côté conducteur et/ou copilote ou passager(s) arrière(s),
- une zone lumineuse décorative
- une zone lumineuse comportant une signalétique notamment en lettre(s) et/ou pictogramme(s), en particulier pour la connectivité du réseau, côté co-pilote ou passager(s) arrière(s),

De préférence des diodes dudit ensemble forme une liseuse et sont de préférence dans des ouvertures traversantes et/ou sur le support de diodes entre la face F2 et la face FA.

De préférence la diode (seule ou une des diodes dudit ensemble) forme un indicateur lumineux d'un interrupteur tactile déporté côté face F3 et en regard de la diode, la diode formant ledit indicateur lumineux est de préférence sur le support de diodes comportant des diodes dut ensemble -formant liseuse de préférence- entre la face F2 et la face FA.

Les diodes formant une liseuse (éclairage de lecture) sont le long d'un bord longitudinal ou latéral du toit
- en (au moins) une rangée formant une bande lumineuse.
- en rond, ou en carré ou même en croix ou toute autre forme.

On peut avoir une couche diffusante ou formant un repère de la diode qui est un témoin lumineux d'un interrupteur (capacitif de préférence) d'un dispositif électrocommandable : diodes formant lieuse, valve optique (« SPD »), couche chauffante etc).

Le support de diode(s) peut être (out ou partie) dans le clair de vitre, espacée ou non des bandes périphériques opaques (même formant cadre opaque) comme un émail de masquage (noir, foncé etc). Le plus souvent, il y a une couche opaque en face F2 et une couche opaque en face F4 voire F3. Leurs largeurs sont identiques ou distinctes.

La largeur Li d'une bande périphérique opaque en face F2 et/ou F3 et/ou F4 est de préférence d'au moins 10mm et même 15mm. Aussi, la longueur du support de diodes peut être supérieure à Li.

Le support de diode(s) (au moins la partie avec la ou les diodes ou au moins la partie sans les diodes) peut être agencé dans ou au voisinage de la région d'une couche opaque, notamment un émail (noir), le long d'un bord périphérique du vitrage feuilleté, généralement en face F2 et/ou face F4 ou encore en face F2 et/ou en face F3.

Aussi, dans un premier mode de réalisation, le support de diode(s) peut même être disposé dans une région du toit dans laquelle le verre extérieur est entièrement (ou partiellement) opaque par la couche opaque (la plus externe), comme un émail (noir), en F2. Cette couche opaque peut être dans cette région du toit une couche pleine (fond continu) ou une couche avec une ou des discontinuités (surfaces sans couche opaque) par exemple couche sous forme d'un ensemble de motifs géométriques (en rond, rectangle, carré etc),ou non, de taille identiques ou distinctes (de taille de plus ou plus petite en s'éloignant de la tranche et/ou motifs de plus ou plus espacés en s'éloignant de la tranche).

Dans ce premier mode de réalisation, la ou les diodes voire le support de diode(s) peut être visible uniquement à l'intérieur et donc masqué par la couche opaque en face F2.

Le support de diode(s) peut être disposé dans une région du toit dans laquelle le verre intérieur est opaque par une couche opaque (la plus interne) comme un émail (noir) de préférence en F4 voire en F3. Cette couche opaque comporte alors au moins une ou des épargnes (par un masque au dépôt ou par retrait notamment laser) au droit de chaque diode. Cette couche opaque par exemple est sous forme d'un ensemble de motifs opaques géométriques ou non (en rond, rectangle, carré etc), de taille identiques ou distinctes (de taille de plus ou plus petite et/ou avec motifs de plus ou plus espacés en s'éloignant de la tranche). Des zones entre les motifs opaques sont au droit des diodes.

Comme diodes on peut citer la gamme des OSLON BLACK FLAT vendue par OSRAM. Pour la lumière rouge, on peut citer comme diode vendue par OSRAM : OSLON BLACK FLAT Lx H9PP. Pour la lumière orange (ambre), on peut citer comme diode vendue par OSRAM : LCY H9PP. Pour la lumière blanche on peut citer comme diode vendue par OSRAM : LUW H9QP ou KW HxL531.TE où x = est nombre de puces dans la diode (par exemple 4 ou 5).

Comme PCB flexible on peut citer la gamme des produits AKAFLEX® (notamment PCL FW) de la société KREMPEL.

Dans des diodes à montage inverse, la face du support de diodes côté face F3 peut être texturé (embossage etc) pour former l'optique de collimation selon a) (première plaque texturée) voire une partie de l'optique de collimation selon b) (la première plaque texturée).

Dans un mode de réalisation du véhicule, il comporte au moins une unité de commande pour piloter les diodes et même au moins un capteur notamment pour détecter la luminosité. Une unité de commande pour piloter les diodes peut être dans le vitrage feuilleté, sur ou en dehors du support de diode(s).

De préférence le toit vitré selon l'invention répond aux spécifications actuelles automobiles en particulier pour la transmission lumineuse T_{L} et/ou la transmission énergétique T_{E} et/ou la réflexion énergétique R_{E} et/ou encore pour la transmission totale de l'énergie solaire TTS.
Pour un toit automobile, on préfère l'un ou les critères suivants :
- T_{E} d'au plus 10% et même de 4 à 6%,
- R_{E} (de préférence côté face F1) d'au plus 10%, mieux de 4 à 5%
- et TTS <30% et même <26%, même de 20 à 23%.
La T_{L} peut être faible par exemple d'au plus 10% et même de 1 à 6%.

Afin de limiter l'échauffement dans l'habitacle ou de limiter l'usage d'air conditionné, l'un des vitrages au moins (de préférence le verre extérieur) est teinté, et le vitrage feuilleté peut comporter également une couche de réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO,
ou d'empilements de couches minces comprenant au moins une couche d'argent (en F2 ou F3), la ou chaque couche d'argent étant disposée entre des couches diélectriques.
On peut cumuler couche (à l'argent) en face F2 et/ou F3 et couche TCO en face F4.
La couche TCO (d'un oxyde transparent électro-conducteur) est de préférence une couche d'oxyde d'étain dopé au fluor (SnO₂:F) ou une couche d'oxyde mixte d'étain et d'indium (ITO).

D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%. Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'ITO est particulièrement préféré, notamment par rapport au SnO₂:F. De conductivité électrique plus élevée, son épaisseur peut être plus faible pour obtenir un même niveau d'émissivité. Aisément déposées par un procédé de pulvérisation cathodique, notamment assisté par champ magnétique, appelé « procédé magnétron », ces couches se distinguent par une plus faible rugosité, et donc un plus faible encrassement.

Un des avantages de l'oxyde d'étain dopé au fluor est en revanche sa facilité de dépôt par dépôt chimique en phase vapeur (CVD), qui contrairement au procédé de pulvérisation cathodique, ne nécessite pas de traitement thermique ultérieur, et peut être mis en œuvre sur la ligne de production de verre plat par flottage.

Par « émissivité », on entend l'émissivité normale à 283 K au sens de la norme EN12898. L'épaisseur de la couche basse émissivité (TCO etc) est ajustée, en fonction de la nature de la couche, de manière à obtenir l'émissivité voulue, laquelle dépend des performances thermiques recherchées. L'émissivité de la couche basse émissivité est par exemple inférieure ou égale à 0,3, notamment à 0,25 ou même à 0,2. Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante : sous-couche haut indice/sous-couche bas indice/ une couche TCO/ surcouche diélectrique optionnelle.

Comme exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer comme couche basse émissivité celles décrites dans le brevet US2015/0146286, sur la face F4, notamment dans les exemples 1 à 3.

Dans une réalisation préférée :
- le premier et/ou le deuxième vitrage est teinté et/ou l'intercalaire de feuilletage est teinté sur tout en partie de son épaisseur (notamment en dehors du côté de la surface la plus lumineuse, souvent celle avec les altérations)
- et/ou l'une des faces F2 ou F3 ou F4 -de préférence la face F4 - du toit vitré, est revêtue d'une couche basse émissivité, notamment comprenant une couche d'oxyde transparent électro-conducteur (dite TCO) notamment un empilement de couches minces avec couche TCO ou un empilement de couches minces avec couche(s) d'argent
- et/ou l'une des faces F2 ou F3 ou F4 -de préférence la face F3 - du toit vitré, est revêtue d'une couche de contrôle solaire, notamment comprenant une couche d'oxyde transparent électro-conducteur (dite TCO) notamment un empilement de couches minces avec couche TCO ou un empilement de couches minces avec couche(s) d'argent
- et/ou un film additionnel (polymérique, comme un polyéthylène téraphtalate PET etc) teinté est entre les faces F2 et F3 ou (collé) en F4 voire en face F1.

En particulier, la face F4 du vitré, est revêtue d'une couche fonctionnelle transparente notamment basse émissivité, de préférence comprenant une couche TCO, dont une zone (alimentée électriquement, donc électrode) formant bouton tactile (pour piloter la première surface lumineuse).

L'invention concerne bien entendu tout véhicule notamment automobile comportant au moins un toit tel que décrit précédemment.

L'invention concerne enfin un procédé de fabrication du toit tel que décrit précédemment qu'il comporte les étapes suivantes:
- découpe par exemple automatique (robotisé) de l'intercalaire de feuilletage
- sous forme d'une unique feuille (de PVB de préférence et même acoustique, teinté ou non) ou d'un feuillet composite PVB/film plastique fonctionnel ou PVB//film plastique fonctionnel /PVB de préférence d'épaisseur d'au plus 0,9mm et même d'épaisseur d'au plus 0,4mm pour former des ouvertures de préférence traversantes et locales (géométrique : rondes, carrés, rectangulaires, notamment de la même forme que les diodes), de préférence autant (et pas plus) d'ouvertures locales que des diodes,
- ou l'intercalaire de feuilletage (de PVB de préférence) comportant un premier feuillet (de PVB de préférence) et un deuxième feuillet (de PVB de préférence) notamment d'épaisseur d'au plus 0,4mm et même d'épaisseur d'au plus 0,2mm, découpe (automatique) du premier feuillet (de PVB de préférence) de préférence d'épaisseur d'au plus 0,9mm pour former des ouvertures de préférence traversantes et locales,
- assemblage du vitrage feuilleté, avec les diodes (et les optiques de collimation de préférence individuelles surtout si ouvertures individuelles de préférence traversantes) logées dans une ou des ouvertures de préférence traversantes ou borgnes plus grandes que la taille des diodes de préférence plus grandes d'au plus 1mm, mieux d'au plus 0,5mm ou même d'au plus 0,2mm ou d'au plus 0,1mm, l'éventuelle deuxième feuillet étant entre la face arrière d'un support de diodes et la face F2 ou face F3 si diode(s) à montage inverse.
De préférence, la ou les diodes sont des composants montés en surface de préférence sur une face dite avant orienté côté face F3 d'un support de diodes flexible, notamment un film plastique (flexible) transparent, avec la face avant mise contre la feuille ou le feuillet PVB avec la ou les ouvertures de préférence traversantes, support de diodes qui dépasse de préférence de la tranche du vitrage feuilleté. Et la face arrière est par exemple contre ou collée côté face F2 (F3 si montage inverse) en particulier, un feuillet PVB (teinté par exemple et/ou acoustique) est entre la face arrière et la face F2 (F3 si montage inverse), notamment plus mince que le feuillet (PVB ou composite) avec les ouvertures traversantes ou borgnes.

En particulier la ou les optiques de collimation de préférence individuelles (une par diode) peuvent être (pré)montés sur les diodes (optiques de collimation sur la face avant de l'enveloppe et/ou via l'entourage périphérique contre la tranches de l'enveloppe des diodes) et/ou le support de diodes.

On réalise le feuilletage (mise sous pression, chauffage) qui peut influer sur la largeur de la ou les ouvertures, par fluage de l'intercalaire. Par fluage, l'intercalaire de feuilletage (premier feuillet, feuille ou feuillet composite) avec l'ouverture plus large que la la diode et même que l'optique de collimation, peut s'étendre jusqu'à être en contact avec la tranche de la diode (de son enveloppe) ou même que l'optique de collimation notamment que l'extension périphérique de l'optique de collimation. Et éventuellement, pour une ouverture traversante, l'intercalaire de feuilletage (feuillet PVB, feuillet composite) peut s'étendre par fluage jusqu'à être entre ladite face de sortie de l'optique de collimation et la face F3 sans être en regard avec la face émettrice de la puce, avec la partie fonctionnelle.

En particulier (avant l'assemblage) l'optique de collimation, voire chaque optique de collimation, est (pré)montée sur une diode (dédiée), notamment sur l'enveloppe de la diode (sur la face avant de l'enveloppe ou sur la tranche notamment via l'extension périphérique de l'optique de collimation) et/ou (pré)montée sur le support de diodes notamment via l'extension périphérique de l'optique de collimation.

Dans la présente invention les termes « trou borgne » ou « ouverture borgne » désignent la même chose.

Dans le cas d'une ouverture traversante d'un feuillet de PVB et de l'ajout d'un film plastique fonctionnel (transparent, PET etc) éventuellement porteur d'un revêtement fonctionnel de préférence transparent et même d'un autre PVB cote face F3, la face de sortie de l'optique de collimation (de préférence texturée) peut être en contact (contacts de la texturation par exemple) ou espacée de la face principale côté face F2 qui est la face du film plastique ou du revêtement fonctionnel (si côté face F2). On peut préférer ne pas percer le revêtement voire le film.

La présente invention est à présent expliquée plus en détail en référence aux figures annexées dans lesquelles :

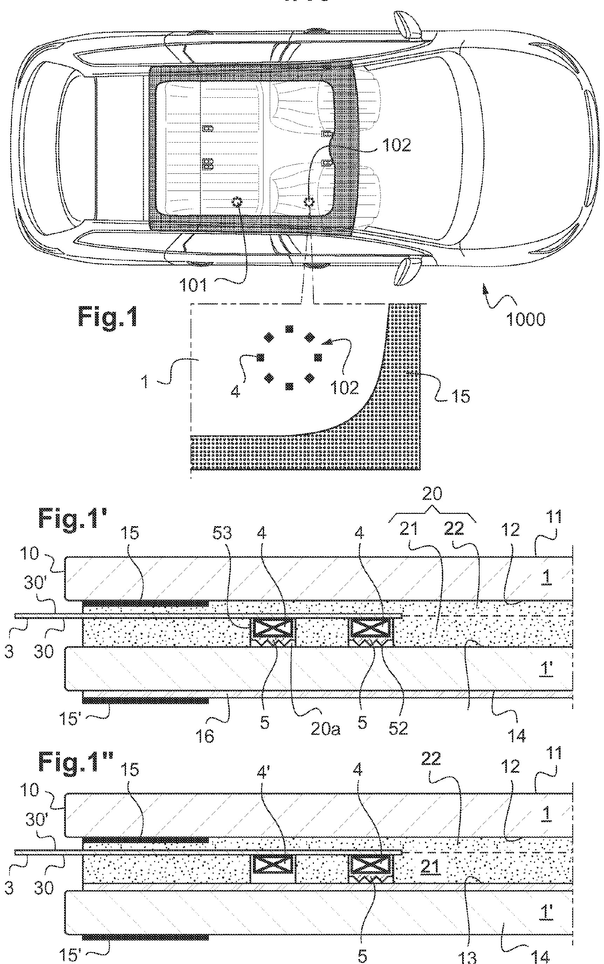

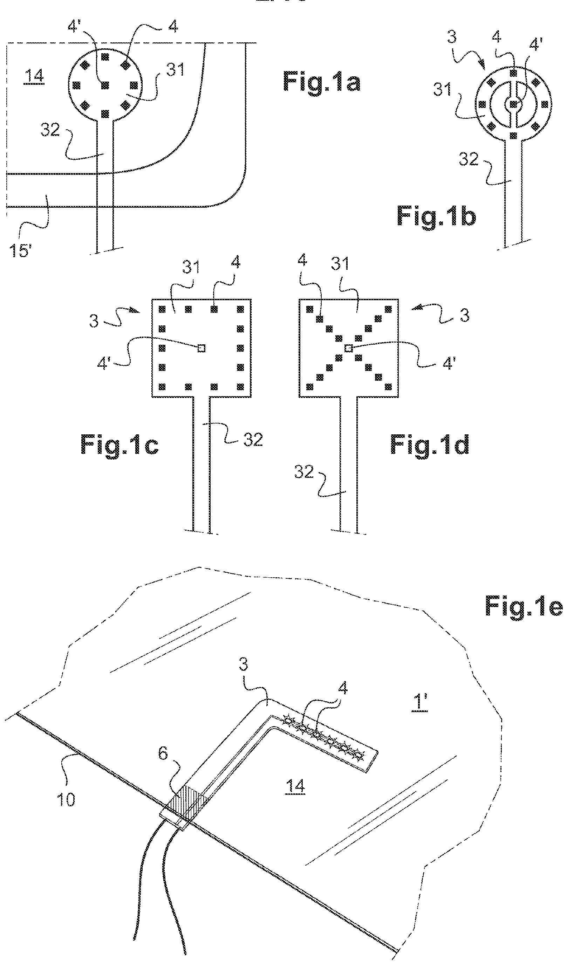

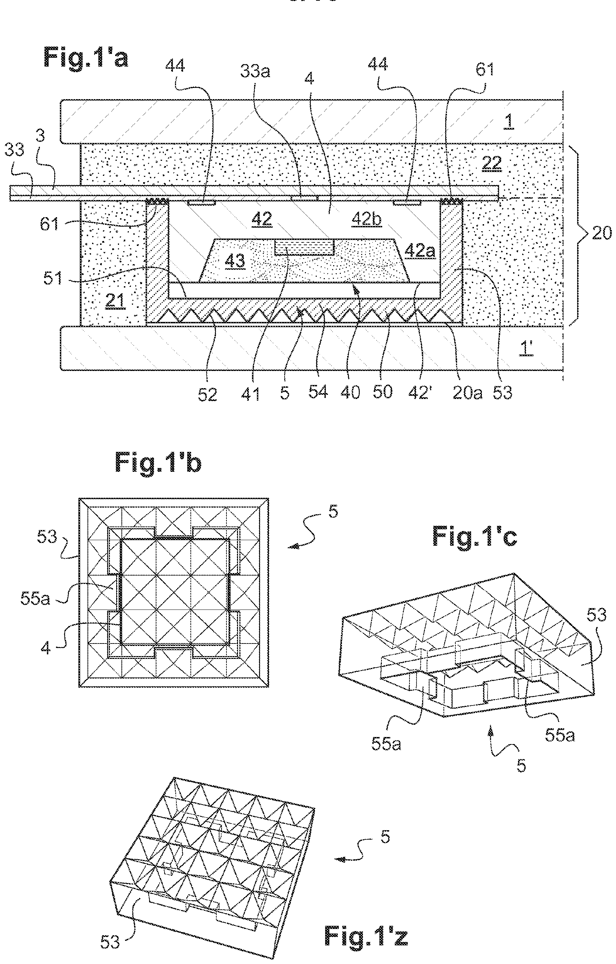

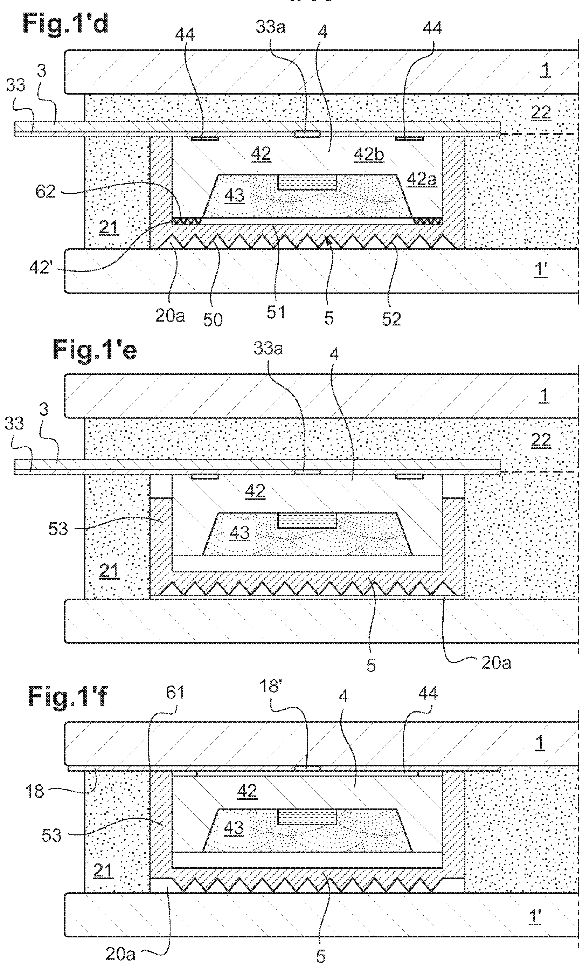

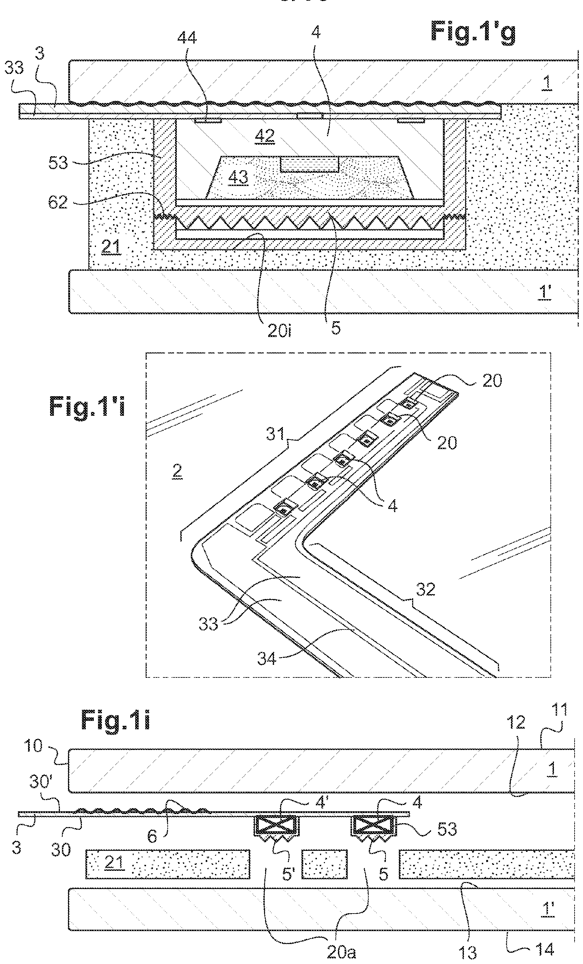

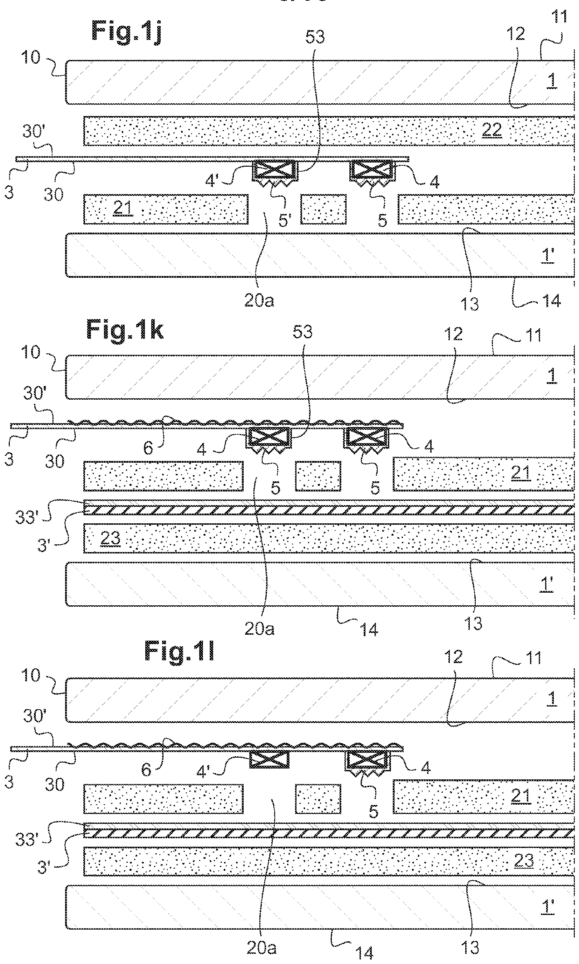

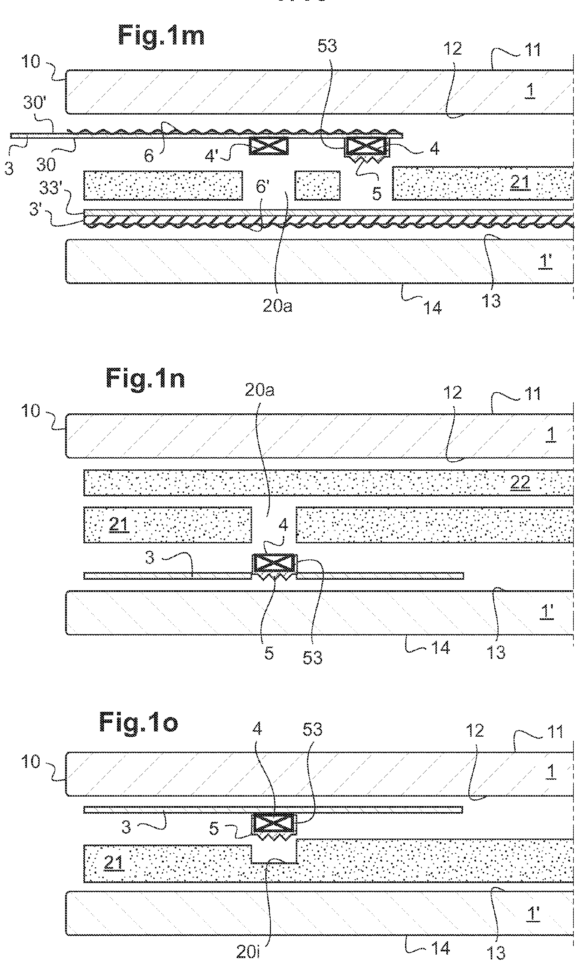

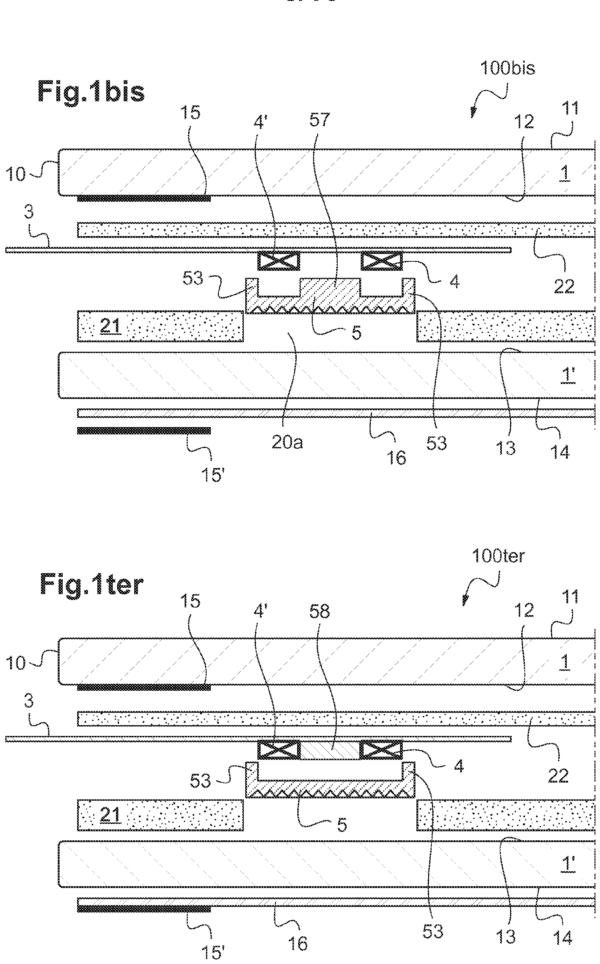

La figure 1 montre une vue de dessus d'un toit vitré feuilleté lumineux 100' d'un véhicule automobile 1000 selon un premier mode de réalisation de l'invention et une vue de détail des diodes formant une liseuse.
La figure 1' montre une vue schématique partielle de coupe du toit vitré feuilleté dans une variante du premier mode de réalisation de l'invention.
La figure 1" montre une vue schématique partielle de coupe du toit vitré feuilleté dans une variante du premier mode de réalisation de l'invention.
Les figures 1a, 1b, 1c, 1e, 1d montrent des vues de face de supports à diodes côté face interne (orienté vers l'habitacle).
La figure l'a montre une vue de détail schématique partielle de coupe, du toit vitré feuilleté 200' selon un mode de réalisation de l'invention.
La figure 1'b montre une vue de devant (côté face F3) d'une pièce porteuse de l'optique de collimation.
La figure 1'c montre une vue de derrière (côté face F2) de cette pièce porteuse de l'optique de collimation.
La figure 1'dz montre une vue en élévation de cette pièce porteuse de l'optique de collimation.
La figure 1'd montre une vue de détail schématique partielle de coupe, du toit vitré feuilleté selon un mode de réalisation de l'invention.
La figure 1'e montre une vue de détail schématique partielle de coupe, du toit vitré feuilleté selon un mode de réalisation de l'invention 3.
La figure 1'f montre une vue de détail schématique partielle de coupe, du toit vitré feuilleté selon un mode de réalisation de l'invention.
La figure 1'g montre une vue de détail schématique partielle de coupe, du toit vitré feuilleté selon un mode de réalisation de l'invention
La figure 1'i montre une vue en perspective d'un PVB des ouvertures traversantes dans le cas de diodes 4 en rangée.
Les figures 1i, 1j, 1k, 1l, 1m ,1n ,1o montrent des vues schématique partielle, en éclaté, de coupe du toit vitré feuilleté lumineux selon l'l'invention, illustrant des procédés de fabrication.
La figure 1bis montre une vue schématique partielle de coupe, en éclaté, du toit vitré feuilleté 100bis selon un mode de réalisation de l'invention.
La figure 1ter montre une vue schématique partielle de coupe, en éclaté, du toit vitré feuilleté 100ter selon un mode de réalisation de l'invention.
La figure 2a montre une vue de détail schématique partielle de coupe, du toit vitré feuilleté selon un mode de réalisation de l'invention.
La figure 2b montre une vue de détail schématique partielle de coupe, du toit vitré feuilleté selon un mode de réalisation de l'invention.
La figure 3a montre une vue de détail schématique partielle de coupe, du toit vitré feuilleté 30' selon un mode de réalisation de l'invention.
La figure 4a montre une vue de détail schématique partielle de coupe, du toit vitré feuilleté 30' selon un mode de réalisation de l'invention et les figures 4b et 4c des exemples des diodes à montage inversé respectivement en vue de dessous ou en perspective.
La figure 5a montre une vue de détail schématique partielle de coupe, du toit vitré feuilleté 500 selon une variante du mode de réalisation de l'invention de la figure 4a.
La figure 6a montre une vue de détail schématique partielle de coupe, du toit vitré feuilleté 600 selon un mode de réalisation de l'invention une variante du mode de réalisation de l'invention de la figure 4a.

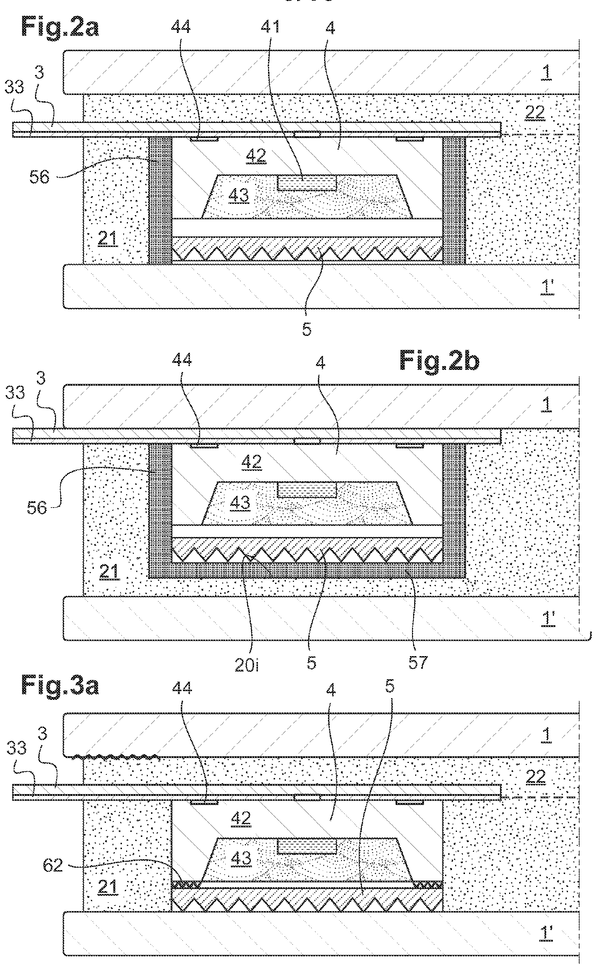

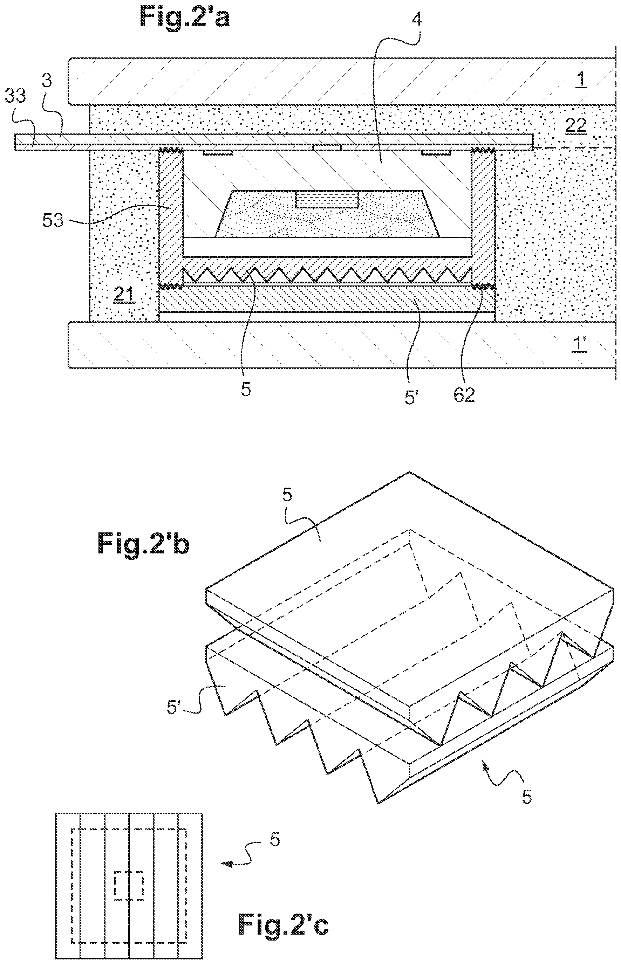

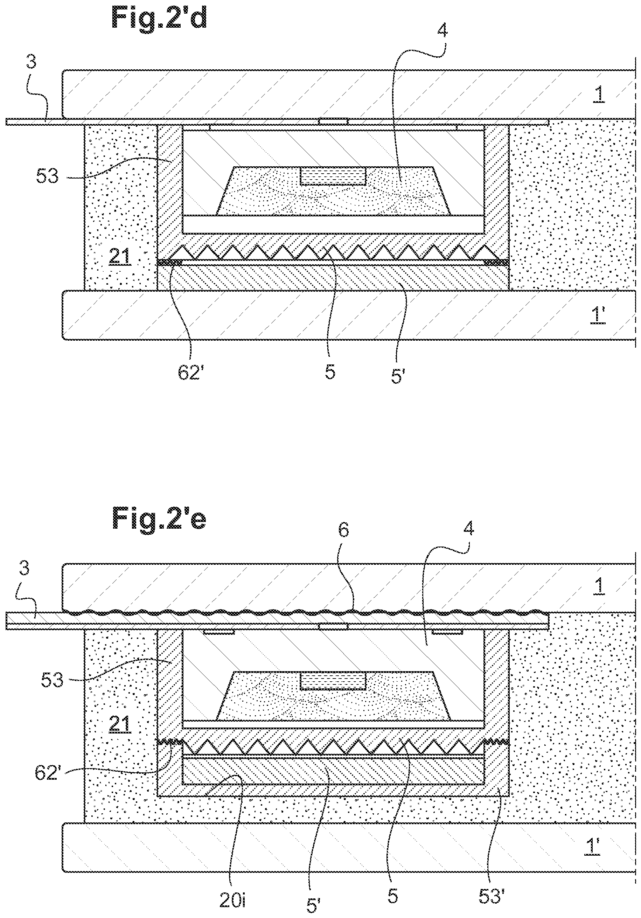

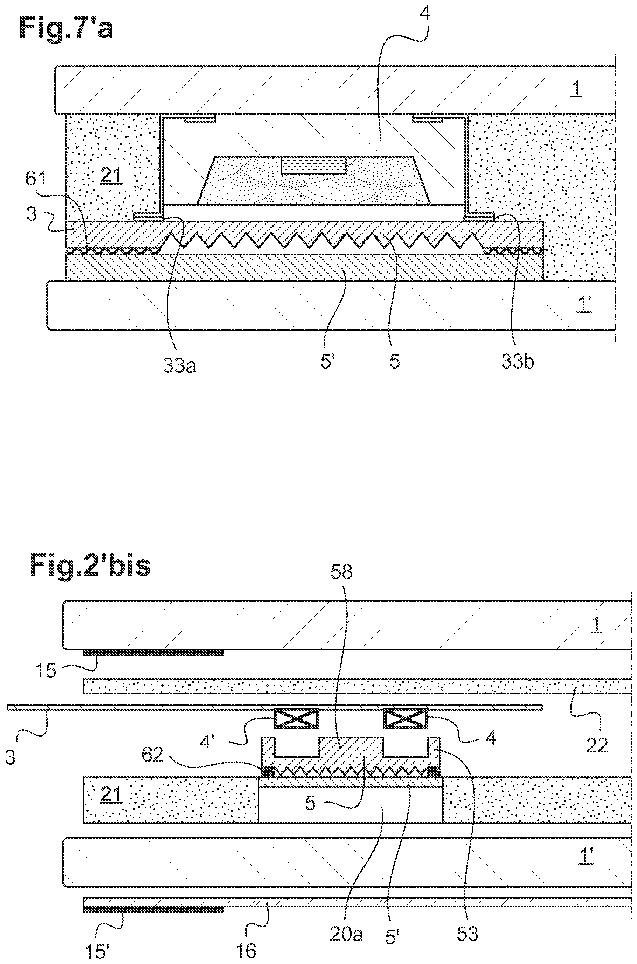

La figure 2'a montre une vue de détail schématique partielle de coupe, du toit vitré feuilleté 200' selon un mode de réalisation de l'invention.
La figure 2'b montre une vue en élévation de cette pièce porteuse de l'optique de collimation.
La figure 2'c montre une vue de devant (côté face F3) d'une pièce porteuse de l'optique de collimation.
La figure 2'd montre une vue de détail schématique partielle de coupe, du toit vitré feuilleté selon un mode de réalisation de l'invention.
La figure 2'e montre une vue de détail schématique partielle de coupe, du toit vitré feuilleté selon un mode de réalisation de l'invention.

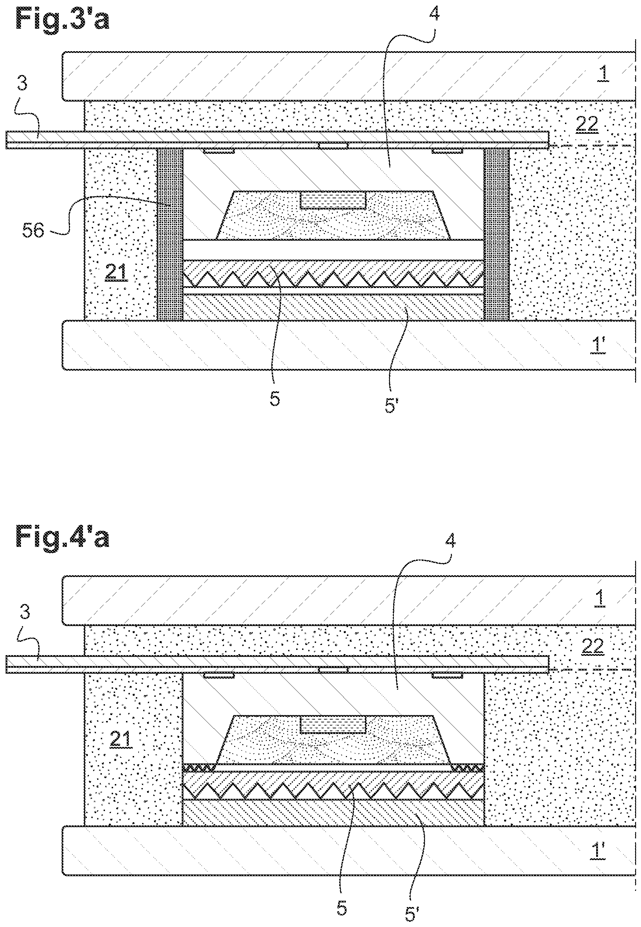

La figure 3'a montre une vue de détail schématique partielle de coupe, du toit vitré feuilleté' selon un mode de réalisation de l'invention.

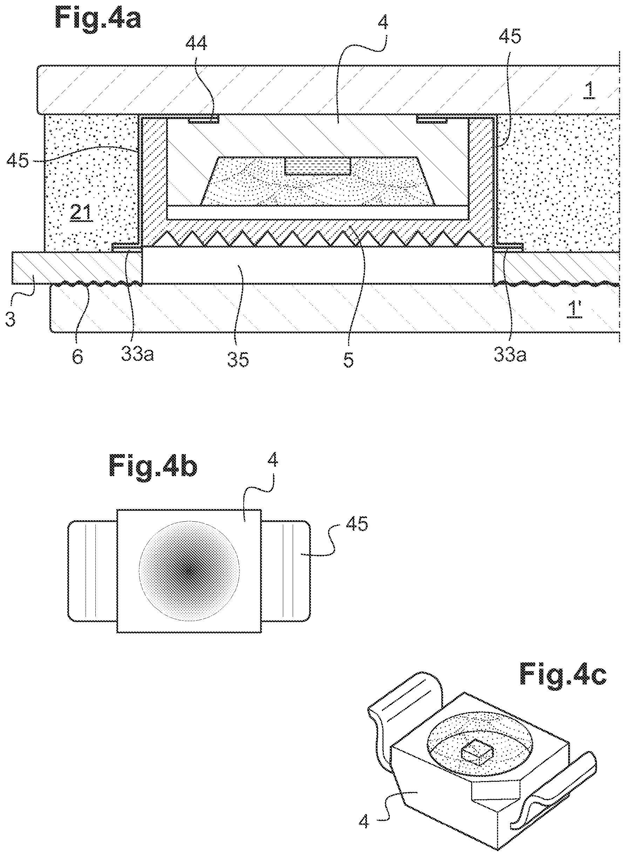

La figure 4'a montre une vue de détail schématique partielle de coupe, du toit vitré feuilleté' selon un mode de réalisation de l'invention.

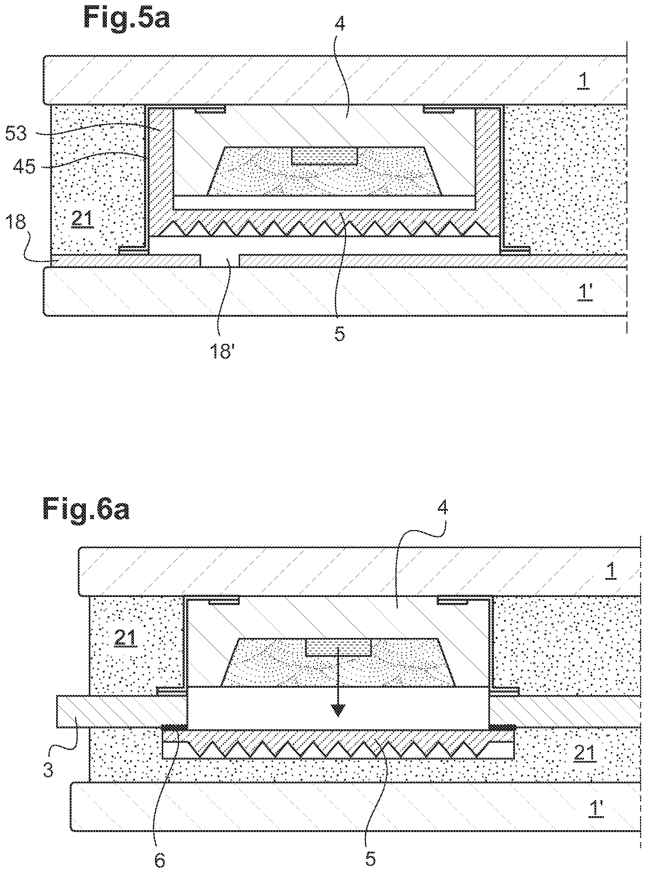

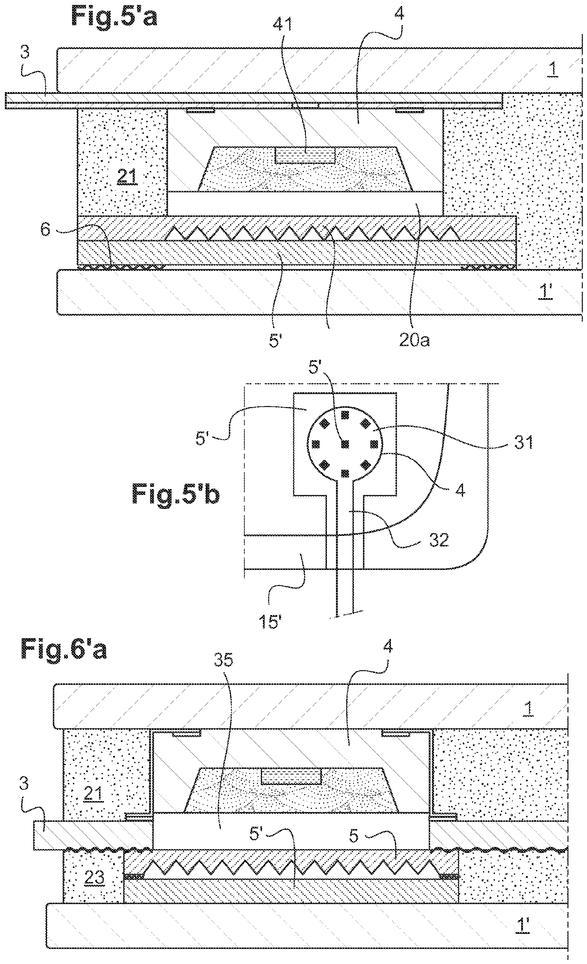

La figure 5'a montre une vue de détail schématique partielle de coupe, du toit vitré feuilleté' selon un mode de réalisation de l'invention La figure 5'b montre une vue de face indiquant le contour du film 5 par rapport au PCB 3.
La figure 6'a montre une vue de détail schématique partielle de coupe, du toit vitré feuilleté' selon un mode de réalisation de l'invention.
La figure 7'a montre une vue de détail schématique partielle de coupe, du toit vitré feuilleté' selon un mode de réalisation de l'invention.
La figure 2'bis montre une vue schématique partielle de coupe, en éclaté, du toit vitré feuilleté selon un mode de réalisation de l'invention.

Par souci de simplification les toits sont représentés plans mais sont en fait bombés. Les éléments ne sont pas représentés à l'échelle.

La figure 1 montre une vue de dessus d'un toit vitré feuilleté lumineux d'un véhicule automobile 1000 selon un premier mode de réalisation de l'invention avec de deux ensembles de diodes 4 formant pour l'un une liseuse à l'arrière et pour l'autre à l'avant.

Un premier ensemble 102 de huit diodes 4 (cf la vue de détail) est sur une première carte de circuit imprimé dite carte PCB (non représentée ici) intégrée entre les deux vitrages du vitrage feuilleté, huit diodes formant un rond disposées dans le clair de vitre dans une zone de bord longitudinal au voisinage d'une zone périphérique de masquage externe 15 (émail opaque..) sur le vitrage extérieur -et d'une zone de masquage interne (émail opaque..) de taille similaire sur le vitrage intérieur (non visible)-.

Alternativement, la liseuse est masquée par la couche 15' et une ou des épargnes sont faites dans la zone de masquage interne ou même est dans une zone (de transition) avec une alternance zone de masquage (couche opaque, comme un émail opaque) et zone transparente du vitrage intérieur.

Des optiques de collimations sont associées aux diodes et sont entre la surface avant des diodes et la face F3 du toit feuilleté (face interne du vitrage intérieur).

La figure 1' montre une vue schématique partielle de coupe du toit vitré feuilleté 100' dans une variante du premier mode de réalisation de l'invention. Le toit vitré feuilleté 100', bombé, comportant :
- un premier vitrage 1, par exemple en verre VG10 et de 2,1mm d'épaisseur, formant vitrage extérieur, avec des première et deuxième faces principales 11, 12 respectivement dites face F1 et face F2
- un deuxième vitrage 1', formant vitrage intérieur par exemple en verre TSA (ou clair ou extraclair) et de 2,1mm d'épaisseur ou même de 1,6mm ou encore de moins de 1,1mm (verre trempé chimiquement notamment), avec des troisième et quatrième faces principales 13, 14 respectivement dites face F3 et face F4, la face F3 éventuellement revêtue d'une couche fonctionnelle (chauffante, basse émissivité etc),
- entre la face F2 et la face F3 formant les faces internes 12, 13 du vitrage feuilleté un intercalaire de feuilletage 20,21,22 en matière polymérique, ici en PVB, d'épaisseur Eₜ de préférence d'environ 1mm ou moins, une couche (un feuillet) de PVB 21 avec une face FB en contact adhésif avec la face F3 et un ensemble d'ouvertures traversantes (ici deux visibles) entre une face FA contre un support de diodes 3 et la face FB, l'épaisseur E_{A} entre ces faces FA et FB correspond à la hauteur des ouvertures H par exemple de 0,76mm environ pour un PVB classique (RC41 de Solutia ou d'Eastman) en variante si nécessaire un PVB acoustique (tricouche ou quadricouche) par exemple d'épaisseur 0,81mm environ
- une couche fonctionnelle 16 par exemple de basse émissivité en face F4 (ITO etc).

Des diodes électroluminescentes inorganiques 4 sont des composants montés en surface (CMS ou SMD en anglais), sur le support de diodes, par exemple émettant dans le blanc.

Le support de diodes est une carte à circuit imprimé dite carte PCB 3 d'épaisseur e'2 d'au plus 0,2mm et de préférence de 0,1mm à 0,2mm. Le support de diodes 3 dépasse de la tranche du vitrage feuilleté. Par exemple il comporte une partie porteuse des diodes et une partie pour la connectique dépassant du vitrage et (en partie) entre les couches périphériques de masquages interne et externe 15',15. La couche 15' peut être en partie sur la couche fonctionnelle 16.

La face dite avant 30 du support de diodes 3 est porteuse de pistes conductrices en regard de la face F3 et la face arrière 30' est contre la face F2 ou face 12. Chaque diode a une face émettrice émettant en direction du vitrage intérieur 1', et chaque diode ayant une tranche.

Pour chacune des diodes, l'intercalaire de feuilletage comprend donc une ouverture traversante 20a entourant la tranche de la diode 4 et même en contact avec une optique de collimation notamment l'extension périphérique de préférence formant entourage de la diode ou des diodes.

Les diodes 4 (avec une seule puce semi-conductrice ici) sont de forme carrée de largeur de l'ordre de 5mm ou moins. Les diodes sont d'épaisseur e2 inférieure à la hauteur du trou H. Les diodes ne sont pas en surépaisseur au risque de fragiliser le verre en créant des points de contraintes. Et les diodes de préférence ne doivent être trop espacées de la face F3 au risque de créer trop de bulles d'air.

On choisit une carte PCB la plus fine possible, flexible et dans le cas montré ici ou les diodes 4 sont dans le clair de vitre (hors de la périphérie avec les couches de masquages externe et interne 15 et 15') même de préférence la plus discrète possible (largeur minimale ou même transparence) par exemple comportant un film transparent comme un PET, PEN ou un polyimide et même pour le circuit imprimé des pistes de connexion transparentes (plutôt qu'en cuivre ou autre métal sauf à les faire suffisamment fines).

Lors de la fabrication on choisit par exemple un premier feuillet 21 avec les ouvertures traversantes et un deuxième feuillet de PVB 22 côté face arrière 30' de la carte PCB. Par fluage les deux feuillets sont accolés avec ou non une interface discernable (ici en pointillés).

Pour mieux diriger le faisceau lumineux, on utilise en outre pour chaque diode a fonction liseuse, une optique de collimation 5 logée dans l'ouverture traversante accueillant la diode, optique de collimation montée sur le support 3 ou sur la diode elle-même. Ici l'optique de collimation 5, transparente, présente une face de sortie avec une partie texturée 50 (motifs bidimensionnels, cones, pyramides) avec des contacts avec la face F3 (ou en variante espacée) et un entourage périphérique 53 en contact avec la tranche de la diode et avec les parois de l'ouverture traversante et pouvant toucher la face avant 30 du support de diodes.

La couche 16 peut avoir une zone formant interrupteur tactile pour allumer la liseuse.

La figure 1" montre une vue schématique partielle de coupe du toit vitré feuilleté dans une variante de la figure 1' dans laquelle
- une couche fonctionnelle 17 par exemple une couche chauffante est en face F3.
- la couche en face F4 est supprimée éventuellement

La couche 17 peut avoir une zone formant interrupteur tactile pour allumer la liseuse.

On peut ajouter sur le support 3 une diode formant témoin lumineux de la zone d'interrupteur tactile et son ouverture traversante associée.

Les figures 1a, 1b, 1c, 1e, 1d montrent des vues de face de supports à diodes côté face interne (orienté vers l'habitacle) avec des arrangements différentes de diodes.

La carte PCB 3 comporte une première partie 31 porteuse des diodes et une partie moins large 32 d'alimentation électrique débouchant au-delà de la tranche du toit.
- en figure 1a on utilise neuf diodes dont huit diodes 4en rond formant liseuse et une centrale 4' formant témoin lumineux
- en figure 1b on utilise neuf diodes dont huit diodes 4en rond formant liseuse et une centrale 4' formant témoin lumineux et on évide une partie 3d du support porteuse des diodes pour plus de discrétion
- en figure 1c on utilise quinze diodes dont quatorze diodes 4 en carré formant liseuse et une centrale 4' formant témoin lumineux
- en figure 1d on utilise dix sept diodes dont seize diodes 4 en croix formant liseuse et une centrale 4' formant témoin lumineux
- en figure 1e on utilise une rangée de six diodes 4 et par exemple le support 3 est coudé, en L avec un adhésif 6 d'étanchéité si contre la face F2.
La figure 1'i montre lors de la fabrication l'ajout du feuillet 21 avec les ouvertures traversantes 20.

La figure l'a montre une vue de détail schématique partielle de coupe du toit vitré feuilleté lumineux selon un mode de réalisation de l'invention.

Chaque diode, de préférence de puissance pour la liseuse, est un composant électronique incluant la puce semi-conductrice 41, et est équipée d'une enveloppe périphérique 42 (souvent dénommée « packaging »), polymérique ou céramique, encapsulant la tranche du composant électronique

L'intercalaire de feuilletage (par fluage lors du feuilletage) ne s'étend pas ici jusqu'à être entre la surface dite avant 42' de l'enveloppe et la face F3 notamment jusqu'à la face avant 40 de la diode (face émettrice de la puce ou plus précisément face de l'ensemble puce et matière couvrante de protection ou à fonction de conversion de longueur d'onde 43 (luminophore)). L'enveloppe peut avoir un profil évasé 42a en s'éloignant de la puce 41.

Le composant électronique 4 comporte ainsi généralement une embase 42b ici partie dite inférieure de l'enveloppe porteuse de la puce-semi-conductrice et un réflecteur évasé vers face F3, ici une partie supérieure 42a de l'enveloppe.

La matière 43 peut être une résine transparente et/ou mélange à un luminophore

Le luminophore peut être juste sur la puce 41. La matière 43 peut être sous affleurante de la surface (du réflecteur) 42a, notamment créant une lame d'air qui peut être utile.

Des exemples de diodes sont décrits dans le document « les leds pour l'éclairage » de Laurent Massol, Edition dunod en pages 140 ; 141

L'enveloppe est par exemple en époxy ou en céramique. Une enveloppe polymérique peut éventuellement se tasser (l'épaisseur finale après feuilletage peut être inférieure à l'épaisseur initiale) lors du feuilletage. L'enveloppe (polymérique) peut être opaque.

En face arrière de la diode 4 (de l'enveloppe), il y a deux surfaces de contacts électriques 44 sur des zones 33 (isolées par gravure 33' etc) d'une couche électroconductrice 33 sur le support 3.

La pièce 5 formant optique de collimation de la diode 4 comporte une face d'entrée 51 lisse (espacée de la surface avant 40) et une face de sortie texturée 52 notamment une zone centrale fonctionnelle texturée 54, ici réseau de pyramides en creux. La pièce 5 comporte une extension périphérique 53 de préférence sous forme d'un entourage ou corps creux pour la fixation au support de diodes 3 par exemple par une colle 61, et/ou à la diode, et/ou pour barrière au PVB (par précaution).

La pièce 5 a par exemple un contour carré. Elle est par exemple en PMMA et obtenue par moulage. Les parois 53 de préférence sont en contact avec le PVB (cavité formant l'ouverture traversante). La pièce 5 est logée ici entièrement dans l'ouverture traversante.20a.

La pièce 5 a une partie logeant la diode 4. Les parois 53 de l'entourage comportent deux ou mieux quatre ergots internes de maintien 55a de la diode par sa tranche.

La zone fonctionnelle de la face texturée est en face de la surface avant 40. La zone périphérique en face de la surface avant 42' de l'enveloppe 42 peut être ou non texturée ou même servir pour créer une lame d'air entre les motifs et la face F3.

La figure 1'b montre une vue de devant (côté face F3) de cette pièce porteuse de l'optique de collimation 5.

La figure 1'c montre une vue de côté montrant l' arrière (côté face F2) de cette pièce porteuse de l'optique de collimation 5 , ici un réseau de pyramides en creux.

La figure 1'z montre une autre vue de derrière (côté face F2) de cette pièce porteuse de l'optique de collimation 5.

La figure 1'd montre une vue de détail schématique partielle de coupe du toit vitré feuilleté selon un mode de réalisation de l'invention qui diffère de la figure 1'a par le collage de la pièce 5 sur la surface périphérique 42' avant de l'enveloppe (plutôt que ou en plus de celui sur le support 3), périphérique à la puce 41. De préférence la face d'entrée 51 est espacée de la diode 40 (zone centrale de la face avant).

En variante il peut s'agir d'un montage en force sur la diode (l'enveloppe), l'extension périphérique peut être espacée du support de diodes3.

La figure 1'e montre une vue de détail schématique partielle de coupe du toit vitré feuilleté selon un mode de réalisation de l'invention qui diffère de la figure 1'a par le fait que la pièce 5 est montée en force sur la diode (l'enveloppe), l'extension périphérique est espacée du support de diodes 3.

La figure 1'f montre une vue de détail schématique partielle de coupe du toit vitré feuilleté selon un mode de réalisation de l'invention qui diffère de la figure 1'a par le fait que la diode est montée sur des pistes de connexion 18 (couche etc) isolées 18' sur la face F3 (suppression du support de diodes et du feuillet arrière PVB) Les connexions (électriques) sont sur la face F2 sous forme d'une couche électroconductrice 18 notamment transparente (zones électroconductrices isolées par une isolation 18' par exemple une bande isolante 18' de largeur submillimétrique, faite par gravure laser par exemple).

La figure 1'g montre une vue de détail schématique partielle de coupe du toit vitré feuilleté selon un mode de réalisation de l'invention qui diffère de la figure 1'a par :
- la suppression du feuillet arrière PVB remplacé par un adhésif,
- et surtout le fait que le feuillet PVB 21 présente un trou borgne 20i (par un feuillet unique ou deux feuillets dont un avec ouvertures traversantes) plutôt qu'une ouverture traversante, amenant de préférence à isoler la face de sortie du fond de PVB par une pièce (double fond) collée à la pièce optique 5.
- Par exemple la plaque texturée 5 est protégée du PVB par exemple ce fond avec un entourage collé à l'entourage de l'optique de collimation par une colle 62..

Comme montré en figure 1'i concernant la fabrication du toit, la carte PCB coudée comporte donc une première partie (rectangulaire) 31 porteuse des diodes 4 (et avec le coude) et une deuxième partie 32 pour la connectique (rectangulaire), par exemple deux pistes de cuivre 33 avec une ligne d'isolation 34 débouchant et dépassant sur la tranche du toit. Cette deuxième partie peut être (beaucoup) plus longue que la première partie.

Ici, la face émettrice est en retrait de la surface avant 42' de l'enveloppe qui fixe donc l'épaisseur maximale e2 de la diode 4.

Les figures 1i, 1j, 1k, 1l, 1m, 1n, 1o montrent des vues schématique partielle, en éclaté, de coupe du toit vitré feuilleté lumineux selon l'invention, illustrant des procédés de fabrication impliquant un support de diodes 3, de préférence transparent,flexible et mince (moins de 0,2mm) avec une face avant 30 contre une face d'un feuillet PVB avec les ouvertures (ou les trous borgnes) et une face arrière 30' vers la face F2. Le support 3 s'étend au dela de la tranche du vitrage feuilleté.

De préférence, avant feuilletage, chaque ouverture locale est plus large que l'ensemble diode 4 optique de collimation 5.

Les optiques de collimations sont prémontées sur le support PCB ou sur les diodes (SMD)

En figure 1i, on utilise un seul feuillet PVB 21 avec les ouvertures traversantes, feuillet qui peut être classique et/ou acoustique et/ou teinté.

En figure 1j, on utilise :
- un premier feuillet PVB 21 avec les ouvertures traversantes, feuillet qui peut être classique et/ou acoustique et/ou teinté
- et un deuxième feuillet PVB 22 côté face arrière 30' du support 3, feuillet qui peut être classique par exemple teinté et plus mince que le premier feuillet (lui tenant compte de l'épaisseur des diodes).

En figure 1k, on utilise :
- un premier feuillet PVB 21 avec les ouvertures traversantes, feuillet qui peut être classique et/ou acoustique et/ou teinté.
- un film transparent 3 (PET etc) porteur d'une couche fonctionnelle 33'côté face F3 (ou face F2 en variante) par exemple basse émissivité ou contrôle solaire, ici par exemple préassemblé avec un autre feuillet PVB 23 (plus mince que le premier feuillet) côté face F3, film couvrant essentiellement les faces F2 et F3.
Alternativement, le film transparent 3' avec la couche 33' est préassemblé avec le premier feuillet et le deuxième feuillet ou juste avec le premier feuillet avant de réaliser les ouvertures traversantes ou borgnes dans l'épaisseur du PVB 21 plutôt que dans l'épaisseur PVB/film PET conducteur.

On préfère que la couche 33' soit distante (pas percé, ni touché) par les trous alors dans le PVB 21 et même aussi pour le support 3. La couche 33' peut être coté face F3 ou F2.

En figure 1l ou 1m, on utilise :
- un premier feuillet PVB 21 avec les ouvertures traversantes, feuillet qui peut être classique et/ou acoustique et/ou teinté.
- localement, en périphérie, un film transparent (PET etc) porteur d'une couche fonctionnelle 33' côté face F2 (ou face F3 en variante), par exemple formant un interrupteur tactile capacitif (pour allumer les diodes formant liseuse),
- un autre feuillet PVB 23 (plus mince que le premier feuillet) côté face F3 ou alternativement un adhésif 6' collant le film 3' (figure 1m).

En figure 1n on utilise :
- un premier feuillet PVB 21 avec les ouvertures traversantes, feuillet qui peut être classique et/ou acoustique et/ou teinté
- et un deuxième feuillet PVB 22 côté face F2, feuillet qui peut être classique par exemple teinté et plus mince que le premier feuillet (lui tenant compte de l'épaisseur des diodes)
- les diodes 4 sont à montage inversé c'est-à-dire la lumière passe dans le support 3 (percé si nécessaire) collé ou contre la face F3.

En figure 1o on utilise un premier feuillet PVB 21 avec les ouvertures formant trous borgnes 20i, feuillet qui peut être classique et/ou acoustique. De préférence chaque ouverture locale ici borgne est plus large que l'ensemble diode 4 optique de collimation 5 avant feuilletage. L'extension périphérique 53 est en contact avec les parois de l'ouverture borgne 20i après feuilletage.

La figure 1bis montre une vue schématique partielle de coupe, en éclaté, du toit vitré feuilleté selon un mode de réalisation de l'invention.

Il diffère de celui montré en figure 1" par le fait que l'ouverture traversante 20a est commune à des diodes 4 et une partie 57 de la pièce optique de collimation 5 forme un espaceur entre les diodes 4. L'extension périphérique 53 est en contact avec les parois de l'ouverture 20a après feuilletage.

La figure 1ter montre une vue schématique partielle de coupe, en éclaté, du toit vitré feuilleté selon un mode de réalisation de l'invention qui diffère de la figure 1bis par le fait que l'espaceur 58 est une pièce distincte de la pièce d'optique de collimation transparente 5 montée sur le support 3. L'extension périphérique 53 est en contact avec les parois de l'ouverture 20a après feuilletage

La figure 2a montre une vue de détail schématique partielle de coupe, du toit vitré feuilleté selon un mode de réalisation de l'invention qui diffère de la figure 1'a par le fait que la pièce latérale de montage 56 formant entourage de la diode et même la logeant est distincte de la partie texturée 5 (placé par le haut etc). La face de sortie peut être espacé de la face F3

La figure 2b montre une vue de détail schématique partielle de coupe, du toit vitré feuilleté selon un mode de réalisation de l'invention qui diffère de la figure 1'a par le fait que
- la pièce latérale de montage 56 formant entourage de la diode 4 et même la logeant est distincte de la partie (plaque) texturée 5 (placé par le haut etc),
- l'ouverture traversante est remplacée par un trou borgne 20i,

La pièce latérale de montage 56 forme une pièce de protection formant un double fond. La face de sortie texturée est en contact ou est espacée de la face F3 et du fond 57

La figure 3a montre une vue de détail schématique partielle de coupe du toit vitré feuilleté selon un mode de réalisation de l'invention qui diffère de la figure 1'a par l'absence d'entourage périphérique, la plaque texturée est collé par une colle 62 sur l'enveloppe 42a (surface 42'), en périphérie la face avant de la puce.

La figure 4a montre une vue de détail schématique partielle de coupe du toit vitré feuilleté selon un mode de réalisation de l'invention qui diffère de la figure 1'a en ce que les diodes sont à montage inversé donc avec un support de diodes côté face F3 (collé via un adhésif à la face F3) et les contacts 44 sont reliées par des contacts latéraux 45 comme des ailettes métalliques aux pistes de connexion côté face arrière (vers F2) du support. Le support peut être percé (trou 35) pour laisser (mieux) passer la lumière. L'entourage périphérique est entre les ailettes 45 et la tranche de la diode.

Les figures 4b et 4c sont des exemples des diodes à montage inversé respectivement en vue de dessous ou en perspective.

La figure 5a montre une vue de détail schématique partielle de coupe du toit vitré feuilleté selon une variante du mode de réalisation de l'invention de la figure 4a dans lequel le support de diodes est supprimé et les contacts 44 sont reliées par des contacts latéraux 45 comme des ailettes métalliques aux pistes de connexion 18 sur la face F3.

La figure 6a montre une vue de détail schématique partielle de coupe, du toit vitré feuilleté selon un mode de réalisation de l'invention une variante du mode de réalisation de l'invention de la figure 4a dans lequel la face avant du support est feuilleté à la face F3 par un feuillet PVB 23.

La figure 2'a montre une vue de détail schématique partielle de coupe du toit vitré feuilleté selon un mode de réalisation de l'invention qui diffère de la figure 1a par une optique de collimation qui comporte deux réseaux de prismes croisés. On utilise une première plaque texturée 5 avec un premier réseau de prismes en sortie et avec son entourage périphérique de la diode 4 collé au support de diodes 2 (face de sortie texturée avec un premier réseau de prismes). Et on utilise une deuxième plaque texturée 5', sur sa face de sortie, collée sur l'extension par une colle 62, et donc avec un deuxième réseau de prismes croisés avec le premier réseau de prismes. La face d'entrée de la deuxième plaque 5' est en contact avec le premier réseau de prismes.

La figure 2'b montre une vue partielle en élévation des deux plaques texturées 5, 5' l'une contre l'autre avec deux réseaux de prismes de section triangulaire.

Chaque prisme présente un demi-angle au sommet (dans le plan orthogonal à la texturation) de 45°. La face d'entrée peut être aussi près que possible de la surface avant 40 (en gardant une lame d'air d'entrée).

La figure 2'c montre une vue de devant (côté face F3) de cette pièce porteuse de l'optique de collimation 5, 55'.

Elle est analogue à la pièce décrite en figure 1'z, 1'c pour la fixation de la diode.

La figure 2'd montre une vue de détail schématique partielle de coupe du toit vitré feuilleté selon un mode de réalisation de l'invention qui diffère de la figure 2'a par la suppression du support de diodes et du feuillet PVB qui était du côté de sa face arrière, les connexions électriques sont sur la face F2. Les connexions (électriques) sont sur la face F2 sous forme d'une couche électroconductrice 18 notamment transparente (zones électroconductrices isolées par une isolation 18' par exemple une bande isolante 18' de largeur submillimétrique, faite par gravure laser par exemple).

La figure 2'e montre une vue de détail schématique partielle de coupe du toit vitré feuilleté selon un mode de réalisation de l'invention qui diffère de la figure 2'a par :
- l'ouverture traversante qui est remplacée par un trou borgne
- une pièce de protection de l'optique de collimation 5, 5' avec les deux plaques texturées (films prismatiques croisés l'un sur l'autre) est collée par colle 62' forme un double fond 53'
- la face arrière du support de diodes 3 est collée à la face F2 par un adhésif 6.

La figure 3'a montre une vue de détail schématique partielle de coupe du toit vitré feuilleté selon un mode de réalisation de l'invention qui diffère de la figure 2'a par le fait que l'optique de collimation avec les deux plaques texturées (films prismatiques croisés l'un sur l'autre) 5, 5' est une pièce distincte d'un entourage de fixation 56 au support PCB 3 logeant l'optique de collimation 5, 5'.

La figure 4'a montre une vue de détail schématique partielle de coupe du toit vitré feuilleté selon un mode de réalisation de l'invention qui diffère de la figure 2'a en ce que :
- l'optique de collimation avec les deux plaques texturées (films prismatiques croisés l'un sur l'autre) 5,5' ne comporte pas d'entourage de fixation
- l'optique de collimation 5, 5' est collée par colle sur la face avant de l'enveloppe.

La figure 5'a montre une vue de détail schématique partielle de coupe du toit vitré feuilleté' selon un mode de réalisation de l'invention qui diffère de la figure 2'a en ce que l'optique de collimation n'est pas logée dans l'ouverture traversante mais entre la face FB et la face F3,. L'optique de collimation 5,5' est un ensemble de deux films prismatiques croisés l'un sur l'autre. Par exemple les motifs de prisme sont réalisés sur chaque film prismatique dans chaque zone en regard de la ou des diodes pour ne pas créer de trop de flou.

La figure 5'b montre une vue de face indiquant le contour des films croisés 5' par rapport au PCB 3 avec la partie 31 à diodes 4, 4' et la partie connectique 32, en bordure de l'émail 15'.

La figure 6'a montre une vue de détail schématique partielle de coupe du toit vitré feuilleté' selon un mode de réalisation de l'invention qui diffère de la figure 2'a en ce que
- les diodes 4 sont à montage inversé
- le support de diodes est côté face FB du film PVB21 à ouverture traversante et est percé 35-on rajoute un autre film PVB 23 côté face F3 de part et d'autre de l'optique de collimation avec les deux plaques texturées (films prismatiques croisés l'un sur l'autre) 5, 5' collé en face avant du support 3 percé.

La figure 7'a montre une vue de détail schématique partielle de coupe du toit vitré feuilleté' selon un mode de réalisation de l'invention qui diffère de la figure 2'a en ce que :
- les diodes 4 sont à montage inversé
- le support de diodes 3 est coté face FB du film PVB à ouverture traversante
- la face du support 3 de diodes côté face F3 est texturé (embossage etc) pour former le premier film prismatique de l'optique de collimation 5 et on rajoute avec un collage 62 le deuxième film prismatique 5' croisé contre la face F3.

La figure 2'bis montre une vue schématique partielle de coupe en éclaté, du toit vitré feuilleté selon un mode de réalisation de l'invention.

Il diffère de celui montré en figure 1' par le fait que l'ouverture traversante 20a est commune à un groupe de diodes 4 et une partie de la pièce optique de collimation 5,5' (films prismatiques croisés l'un sur l'autre, avec une colle 62 en périphérie) formant un espaceur 58 entre les diodes 4, 4'.

## Revendications

1. Toit vitré feuilleté lumineux de véhicule notamment automobile (1000) comprenant un vitrage feuilleté comportant :
- un premier vitrage transparent (1), en verre minéral, éventuellement teinté, avec des faces principales (11, 12) dite faces F1 et F2; vitrage destiné à être le vitrage extérieur,
- un deuxième vitrage transparent (1') en verre minéral, avec des faces principales (13, 14) dites faces F3 et F4, vitrage destiné à être le vitrage intérieur
- entre les faces F2 et F3 qui sont les faces internes du vitrage feuilleté, un film intercalaire de feuilletage transparent, éventuellement teinté, en matière polymérique (2, 20), film intercalaire de feuilletage ayant une face principale FA côté face F2 et une face principale FB côté face F3, face FA éventuellement en contact adhésif avec la face F2 et face FB éventuellement en contact adhésif avec la face F2
- un ensemble de N>1 diodes électroluminescentes inorganiques (4), chaque diode comportant au moins une puce semi-conductrice (41), chaque diode étant apte à émettre en direction de la face F3, ayant une surface avant (40) **caractérisé en ce que** ledit intercalaire de feuilletage est pourvu entre la face FA et la face FB d'une ou d'un ensemble de M ouvertures qui sont de préférence traversantes (20a) ou formant trous borgnes (20i),
**en ce que** chaque diode est associée à une ouverture traversante ou un trou borgne logeant la diode
ou **en ce qu'**au moins un groupe desdites diodes est associé à une même ouverture traversante dite commune ou un trou borgne dit commun, logeant le groupe de diodes **en ce que** le vitrage feuilleté comporte en outre un ensemble d'optiques de collimation (5), chaque optique de collimation, notamment transparente étant associée à une diode électroluminescente (4), dite diode dédiée, qui est dans l'ouverture de préférence traversante ou associée au groupe de diodes électroluminescentes qui sont dans l'ouverture commune de préférence traversante et chaque optique de collimation, est agencée entre les faces F2 et F3, avec au moins une partie fonctionnelle entre la surface avant (40) et la face F3
et **en ce qu'**au moins une ou chaque optique de collimation, ayant une face d'entrée (51) côté face F2 et une face de sortie (52) côté face F3, comporte :
- a) un réseau de motifs bidimensionnels, côté face de sortie (52), notamment une plaque texturée avec ledit réseau,
ou
- b) un ensemble prismatique comportant :
- un premier réseau de motifs prismatiques (5), notamment une première plaque texturée, l'ensemble des motifs du premier réseau étant des prismes côté face F3 s'étendant longitudinalement suivant une direction parallèle ou formant un angle d'au plus 10° avec la tranche longitudinale du toit,
- et un deuxième réseau de motifs prismatique (5'), notamment une deuxième plaque texturée, croisé avec le premier réseau de motifs prismatiques, l'ensemble des motifs du deuxième réseau sont des prismes côté face F3 s'étendant longitudinalement suivant une direction perpendiculaire avec l'axe longitudinal du premier réseau prismatique ou formant un angle d'au plus de 90±10°.

2. Toit vitré feuilleté lumineux de véhicule selon la revendication précédente **caractérisé en ce qu'**au moins une ou chaque optique de collimation notamment pour a) comporte une plaque plane fonctionnelle partiellement texturée dans son épaisseur, dite plaque texturée, qui comporte la face d'entrée (51) orientée vers la face F2 en regard de la diode dans l'ouverture de préférence traversante ou du groupe de diodes dans l'ouverture commune de préférence traversante et une face de sortie (52) orientée vers la face F3 texturée, texturation formant l'ensemble desdits motifs de hauteur submillimétrique et éventuellement **en ce que** pour b) il comporte une deuxième plaque plane fonctionnelle partiellement texturée dans son épaisseur, dite plaque texturée, qui comporte une deuxième face d'entrée orientée vers la face de sortie de la première plaque, et ladite face de sortie orientée vers la face F3, texturée, texturation formant ensemble de motifs de hauteur submillimétrique, la deuxième plaque étant notamment contre la première plaque, voire collée en périphérie, et plus proche de la face F3 voire en contact de la face.

3. Toit vitré feuilleté lumineux de véhicule selon l'une des revendications précédentes **caractérisé en ce qu'**au moins une ou chaque optique de collimation est une pièce, de préférence monolithique pour a), ou en plusieurs morceaux solidaires dans l'ouverture de préférence traversante, pièce montée sur un support de diodes et/ou montée sur la diode dans l'ouverture de préférence traversante ou sur une diode du groupe de diodes, pièce comportant :
- la partie fonctionnelle de l'optique de collimation notamment une plaque texturée pour a) ou, pour b), une première plaque texturée et une deuxième plaque texturée
- une extension périphérique (53), s'étendant en direction de la face F2 le long de la tranche de la diode ou d'au moins une des diodes dudit groupe de diodes, et même en contact avec ladite tranche de la diode, et mieux espacée d'au plus 2mm ou en contact avec l'intercalaire de feuilletage (21) notamment paroi de l'ouverture de préférence traversante.

4. Toit vitré feuilleté lumineux de véhicule selon la revendication précédente **caractérisé en ce que** l'extension périphérique (53) est un entourage de la diode (4) ou du groupe de diodes et notamment est en contact avec l'ouverture de préférence traversante.

5. Toit vitré feuilleté lumineux de véhicule selon la revendication précédente **caractérisé en ce que** l'entourage périphérique (53) présente un logement d'accueil de la diode ou du groupe de diodes notamment la paroi de l'entourage comporte des ergots de maintien de la diode ou du groupe de diodes.

6. Toit vitré feuilleté lumineux de véhicule selon l'une des revendications précédentes **caractérisé en ce que** les diodes sont à montage inverse, la face d'un support de diodes côté face F3 est texturée et forme l'optique de collimation selon a) ou une première plaque texturée de l'optique de collimation selon b) ou **en ce que** l'optique de collimation comprend une plaque texturée et forme l'optique de collimation selon a) ou une première plaque texturée de l'optique de collimation selon b), plaque texturée qui est entre la face de l'intercalaire de feuilletage côté face F3 et la face F3 ou est dans l'ouverture.

7. Toit vitré feuilleté lumineux de véhicule selon l'une des revendications précédentes **caractérisé en ce qu'**au moins une ou chaque optique de collimation comporte :
- a) ledit réseau de motifs bidimensionnels, côté face de sortie (52), comportant une première plaque texturée
ou
- b) ledit ensemble prismatique comportant ledit premier réseau prismatique (5), notamment un premier film ou une première plaque texturée, l'ensemble des motifs du premier réseau étant des prismes côté face F3 s'étendant longitudinalement suivant un axe ou une direction parallèle ou formant un angle d'au plus 5° et même d'au plus 2° avec la tranche longitudinale du toit , et le deuxième réseau prismatique (5'), notamment un deuxième film ou une deuxième plaque texturée croisé avec le premier film, l'ensemble des motifs du deuxième réseau sont des prismes côté face F3 s'étendant longitudinalement suivant une direction perpendiculaire avec l'axe longitudinal du premier réseau prismatique ou formant un angle d'au plus de 90±10° voire d'au plus 90±5° et même de 90±2°.

8. Toit vitré feuilleté lumineux de véhicule selon l'une des revendications précédentes **caractérisé en ce que** les motifs sont jointifs ou essentiellement jointifs.

9. Toit vitré feuilleté lumineux de véhicule selon l'une des revendications précédentes **caractérisé en ce que** les motifs bidimensionnels éventuellement tronqués, notamment cônes ou motifs pyramidaux, ou les prismes, présentent un demi-angle au sommet allant de 35 à 55° et mieux de 40° à 50°.

10. Toit vitré feuilleté lumineux de véhicule selon l'une des revendications précédentes **caractérisé en ce que** les motifs bidimensionnels éventuellement tronqués, notamment cônes ou motifs pyramidaux, sont en creux.

11. Toit vitré feuilleté lumineux de véhicule selon l'une des revendications précédentes **caractérisé en ce qu'**un support flexible dit support de diode(s) (3) est collé ou plaqué contre la face F2 ou la face F3 en montage inversé des diodes, support de diode(s) d'épaisseur e'2 qui est d'au plus 0,2mm ou d'au plus 0,15mm et même d'au plus 0,1mm et de préférence le support de diodes dépasse de la tranche du toit vitré feuilleté, notamment comporte une première partie (31) porteuse des diodes, éventuellement évidée, et une partie (32) moins large d'alimentation électrique débouchant au-delà de la tranche du toit.

12. Toit vitré feuilleté lumineux de véhicule selon l'une des revendications précédentes **caractérisé en ce que** chaque diode étant un composant électronique (40) équipée d'une enveloppe périphérique (42), notamment polymérique ou céramique, encapsulant la tranche du composant électronique, notamment enveloppe définissant la tranche de la diode, notamment en saillie, et en entourant la puce semi-conductrice,. de préférence composants montés en surface sur la face avant d'un support de diode(s).

13. Toit vitré feuilleté lumineux de véhicule selon l'une des revendications précédentes **caractérisé en ce que** des diodes dudit ensemble forment une liseuse et sont de préférence dans les ouvertures traversantes et/ou sur un support de diodes entre la face F2 et la face FA.

14. Toit vitré feuilleté lumineux de véhicule selon l'une des revendications précédentes **caractérisé en ce que** les diodes (4) avec leurs optiques de collimations (5) sont dans des ouvertures traversantes ou borgnes d'un PVB ou dans des ouvertures traversantes ou borgnes ou d'un PVB/film fonctionnel avec un éventuel revêtement fonctionnel/PVB ou **en ce que** l'ouverture traversante ou borgne est commune à des diodes et une partie de la pièce optique de collimation (5) forme un espaceur (56) entre les diodes 4 ou un espaceur est une pièce distincte de la pièce d'optique de collimation.

15. Véhicule comportant au moins un toit vitré feuilleté lumineux selon l'une quelconque des revendications précédentes.

16. Procédé de fabrication du toit selon l'une des revendications précédentes de toit **caractérisé en ce qu'**il comporte les étapes suivantes:
- découpe d'un feuillet de PVB ou d'un feuillet composite PVB/ film plastique fonctionnel tel que PET portant un éventuel revêtement fonctionnel ou PVB/ film plastique fonctionnel tel que PET portant un éventuel revêtement fonctionnel /PVB, d'épaisseur de préférence d'au plus 0,9mm pour former la ou les ouvertures traversantes de préférence locales
- assemblage du vitrage feuilleté, avec les diodes dans une ou des ouvertures plus larges que la taille des diodes et même que l'entourage ou extension périphérique de chaque optique de collimation.

17. Procédé de fabrication du toit selon la revendication précédente **caractérisé en ce que** la ou les diodes (4) sont des composants montés en surface de préférence sur une face dite avant orientée côté face F3 d'un support de diodes flexible, notamment un film plastique transparent, avec la face avant contre le feuillet PVB, le support de diodes dépassant de préférence de la tranche du vitrage feuilleté.

18. Procédé de fabrication du toit selon l'une des revendication précédentes de procédé **caractérisé en ce que** la ou chaque optique de collimation est une plaque texturée avec un réseau de motifs bidimensionnels ou est un ensemble prismatique comportant avec un premier réseau prismatique (5) côté face F3 s'étendant longitudinalement suivant un axe notamment qui est une première plaque texturée, et comportant un deuxième réseau prismatique (5') croisé avec le premier réseau prismatique, notamment qui est une deuxième plaque texturée.

## Patentansprüche

1. Beleuchtetes Verbundglasschiebedach eines Fahrzeugs, insbesondere eines Automobils (1000), umfassend eine Verbundverglasung, die Folgendes aufweist:
- eine erste transparente Verglasung (1), hergestellt aus Mineralglas, gegebenenfalls gefärbt, mit Hauptseiten (11, 12), sogenannte Seiten F1 und F2; wobei die Verglasung als eine Außenverglasung vorgesehen ist,
- eine zweite transparente Verglasung (1'), hergestellt aus Mineralglas, mit Hauptseiten (13, 14), sogenannte Seiten F3 und F4, wobei die Verglasung als eine Innenverglasung vorgesehen ist
- zwischen den Seiten F2 und F3, welche die Innenseiten der Verbundverglasung sind, eine transparente Zwischenverbundfolie, gegebenenfalls gefärbt, hergestellt aus Polymermaterial (2, 20), wobei die Zwischenverbundfolie eine Hauptseite FA auf der Seite F2 und eine Hauptseite FB auf der Seite F3 hat, wobei die Seite FA gegebenenfalls in Klebekontakt mit der Seite F2 steht und die Seite FB gegebenenfalls in Klebekontakt mit der Seite F2 steht
- eine Reihe N>1 von anorganischen Leuchtdioden (4), die eine vordere Oberfläche (40) haben, wobei jede Diode mindestens einen Halbleiterchip (41) aufweist, wobei jede Diode vorgesehen ist, in die Richtung der Seite F3 zu emittieren,
**dadurch gekennzeichnet, dass** sich die Zwischenschicht des Verbunds zwischen der Seite FA und der Seite FB von einer oder einer Reihe von M Öffnungen, die vorzugsweise Durchgangs- (20a) oder Sacklochbohrungen (20i) sind, befindet,
dadurch, dass jede Diode einer Durchgangsöffnung oder einer Sacklochbohrung zugeordnet ist, welche die Diode beherbergt
oder dadurch, dass mindestens eine Gruppe der Dioden derselben gemeinsamen Durchgangsöffnung oder einer gemeinsamen Sacklochbohrung zugeordnet ist, welche die Gruppe von Dioden beherbergt, dadurch, dass die Verbundverglasung unter anderem eine Reihe von Kollimationsoptiken (5) aufweist, wobei jede Kollimationsoptik, insbesondere eine transparente einer Leuchtdiode (4) zugeordnet ist, die als dedizierte Diode bezeichnet wird, die sich vorzugsweise in der Durchgangsöffnung befindet oder einer Gruppe von Leuchtdioden zugeordnet ist, die sich vorzugsweise in der gemeinsamen Durchgangsöffnung befinden, und jede Kollimationsoptik zwischen den Seiten F2 und F3 angeordnet ist mit mindestens einem funktionalen Abschnitt zwischen der vorderen Oberfläche (40) und der Seite F3
und dadurch, dass mindestens eine oder jede Kollimationsoptik, die eine Eintrittsseite (51) auf der Seite F2 und eine Austrittsseite (52) auf der Seite F3 hat, Folgendes aufweist:
- a) ein Netz aus zweidimensionalen Mustern, auf der Austrittsseite (52), insbesondere eine mit diesem Netz texturierte Platte,
oder
- b) eine prismatische Anordnung, die Folgendes aufweist:
- ein erstes Netz aus prismatischen Mustern (5), insbesondere eine erste texturierte Platte, wobei die Anordnung aus Mustern des ersten Netzes Prismen auf der Seite F3 sind, die sich längs entlang einer parallelen Richtung erstrecken oder einen Winkel von höchstens 10° mit dem Längsrand des Daches bilden,
- und ein zweites Netz aus prismatischen Mustern (5'), insbesondere eine zweite texturierte Platte, die sich mit dem ersten Netz aus prismatischen Mustern kreuzt, wobei die Anordnung aus Mustern des zweiten Netzes Prismen auf der Seite F3 sind, die sich längs entlang einer Richtung senkrechten zur Längsachse des ersten prismatischen Netzes erstrecken oder einen Winkel von höchstens 90±10° bilden.

2. Beleuchtetes Verbundglasschiebedach eines Fahrzeugs nach dem vorstehenden Anspruch, **dadurch gekennzeichnet, dass** mindestens eine oder jede Kollimationsoptik insbesondere für a) eine ebene funktionelle Platte aufweist, die teilweise in ihrer Dicke texturiert ist, die sogenannte texturierte Platte, welche die Eintrittsseite (51), die in Richtung der Seite F2 ausgerichtet ist in Bezug auf die Diode in der vorzugsweise Durchgangsöffnung oder der Gruppe von Dioden in der vorzugsweise gemeinsamen Durchgangsöffnung, und eine Austrittsseite (52) aufweist, die in Richtung der texturierten Seite F3 ausgerichtet ist, wobei die Textur die Anordnung aus Mustern von submillimetrischer Höhe bildet und gegebenenfalls dadurch, dass sie für b) eine zweite ebene funktionelle Platte aufweist, die teilweise in ihrer Dicke texturiert ist, die sogenannte texturierte Platte, welche eine zweite Eintrittsseite, die in Richtung der Austrittsseite der ersten Platte ausgerichtet ist, und die Austrittsseite aufweist, die in Richtung der texturierten Seite F3 ausgerichtet ist, wobei die Textur die Anordnung aus Mustern von submillimetrischer Höhe bildet, wobei die zweite Platten insbesondere gegen die erste Platte, oder am Umfang oder mehr nahe der Seite F3, oder in Kontakt mit der Seite haftet.

3. Beleuchtetes Verbundglasschiebedach eines Fahrzeugs nach einem der vorstehenden Ansprüche, **dadurch gekennzeichnet, dass** mindestens eine oder jede Kollimationsoptik vorzugsweise ein monolithisches Teil ist oder für a) aus mehreren verbundenen Stücken in der vorzugsweise Durchgangsöffnung besteht, wobei das Teil auf einem Träger der Dioden montiert ist und/oder auf der Diode in der vorzugsweise Durchgangsöffnung oder auf der Diode der Gruppe von Dioden montiert ist, wobei das Teil Folgendes aufweist:
- das funktionelle Teil der Kollimationsoptik, insbesondere eine texturierte Platte für a) oder für b), eine erste texturierte Platte und eine zweite texturierte Platte
- eine Umfangserstreckung (53), die sich in Richtung der Seite F2 erstreckt in der Länge des Randes der Diode oder mindestens einer der Dioden der Gruppe von Dioden, und sogar mit dem Rand der Diode in Kontakt steht, und besser um höchstens 2 mm beabstandet ist oder mit der Zwischenschicht des Verbunds (21), insbesondere der Wand der vorzugsweise Durchgangsöffnung in Kontakt steht.

4. Beleuchtetes Verbundglasschiebedach eines Fahrzeugs nach dem vorstehenden Anspruch, **dadurch gekennzeichnet, dass** die Umfangserstreckung (53) ein Umfeld der Diode (4) oder der Gruppe von Dioden ist und insbesondere mit der vorzugsweise Durchgangsöffnung in Kontakt steht.

5. Beleuchtetes Verbundglasschiebedach eines Fahrzeugs nach dem vorstehenden Anspruch, **dadurch gekennzeichnet, dass** das periphere Umfeld (53) eine Aufnahmesenkung der Diode oder der Gruppe von Dioden bereitstellt, insbesondere aufweist die Wand des Umfelds Nasen, um die Diode oder die Gruppe von Dioden zu halten.

6. Beleuchtetes Verbundglasschiebedach eines Fahrzeugs nach einem der vorstehenden Ansprüche, **dadurch gekennzeichnet, dass** die Dioden in umgekehrter Reihenfolge montiert werden, die Seite des Trägers der Dioden auf der Seite F3 ist texturiert und bildet die Kollimationsoptik gemäß a) oder eine erste texturierte Platte der Kollimationsoptik gemäß b) oder dadurch, dass die Kollimationsoptik eine texturierte Platte umfasst und die Kollimationsoptik gemäß a) bildet oder eine erste texturierte Platte der Kollimationsoptik gemäß b), wobei sich die texturierte Platte zwischen der Seite der Zwischenschicht des Verbunds auf der Seite F3 und der Seite F3 befindet oder in der Öffnung.

7. Beleuchtetes Verbundglasschiebedach eines Fahrzeugs nach einem der vorstehenden Ansprüche, **dadurch gekennzeichnet, dass** mindestens eine oder jede Kollimationsoptik Folgendes aufweist:
- a) das Netz aus zweidimensionalen Mustern, auf der Austrittsseite (52), aufweisend eine erste texturierte Platte
oder
- b) die prismatische Anordnung, aufweisend das erste prismatische Netz (5), insbesondere eine erste Folie oder eine erste texturierte Platte, wobei die Anordnung aus Mustern des ersten Netzes Prismen sind auf der Seite F3, die sich längs entlang einer Achse oder in einer parallelen Richtung erstrecken oder einen Winkel von höchstens 5° und sogar von höchstens 2° mit dem Längsrand des Daches bilden, und ein zweites prismatisches Netz (5'), insbesondere eine zweite Folie oder eine zweite texturierte Platte, die sich mit der ersten Folie kreuzt, wobei die Anordnung aus Mustern des zweiten Netzes Prismen sind auf der Seite F3, die sich längs entlang einer Richtung senkrecht zur Längsachse des ersten prismatischen Netzes erstrecken oder einen Winkel von höchstens 90±10° oder von höchstens 90±5° und sogar von 90±2° bilden.

8. Beleuchtetes Verbundglasschiebedach eines Fahrzeugs nach einem der vorstehenden Ansprüche, **dadurch gekennzeichnet, dass** die Muster aneinanderliegen oder im Wesentlichen aneinanderliegen.

9. Beleuchtetes Verbundglasschiebedach eines Fahrzeugs nach einem der vorstehenden Ansprüche, **dadurch gekennzeichnet, dass** die zweidimensionalen Muster gegebenenfalls stumpfartig, insbesondere kegelartig sind oder pyramidenförmige Muster oder Prismen sind, die einen halben Öffnungswinkel von 35 bis 55° bereitstellen und mehr von 40° bis 50°.

10. Beleuchtetes Verbundglasschiebedach eines Fahrzeugs nach einem der vorstehenden Ansprüche, **dadurch gekennzeichnet, dass** die zweidimensionalen Muster gegebenenfalls stumpfartig, insbesondere kegelartig sind oder pyramidenförmige Muster sind, die hohl sind.

11. Beleuchtetes Verbundglasschiebedach eines Fahrzeugs nach einem der vorstehenden Ansprüche, **dadurch gekennzeichnet, dass** ein flexibler Träger, der Träger der Diode(n) (3), in umgekehrter Montagereihenfolge der Dioden gegen die Seite F2 oder die Seite F3 geklebt oder plattiert wird, wobei der Träger der Diode(n) eine Dicke e'2 hat, die höchstens 0,2 mm oder höchstens 0,15 mm oder sogar höchstens 0,1 mm beträgt und wobei vorzugsweise der Träger der Dioden über den Rand des Verbundglasschiebedachs hinausragt, insbesondere einen ersten tragenden Abschnitt (31) der Dioden aufweist, der gegebenenfalls vertieft ist, und einen kleineren Abschnitt (32) der Stromversorgung, der weiter in den Rand des Dachs mündet.

12. Beleuchtetes Verbundglasschiebedach eines Fahrzeugs nach einem der vorstehenden Ansprüche, **dadurch gekennzeichnet, dass** jede Diode eine elektronische Komponente (40) ist, die mit einem umlaufenden Mantel (42) ausgestattet ist, insbesondere aus Polymer oder Keramik, der den Rand der elektrischen Komponente einkapselt, wobei insbesondere der Mantel den Rand der Diode definiert, insbesondere als Vorsprung, und den Halbleiterchip umgibt, wobei die Komponenten vorzugsweise auf der Oberfläche der Seite vor dem Träger der Diode(n) montiert sind.

13. Beleuchtetes Verbundglasschiebedach eines Fahrzeugs nach einem der vorstehenden Ansprüche, **dadurch gekennzeichnet, dass** die Dioden der Anordnung eine Leseleuchte bilden und sich vorzugsweise in den Durchgangsöffnungen befinden und/oder auf einem Träger der Dioden zwischen der Seite F2 und der Seite FA.

14. Beleuchtetes Verbundglasschiebedach eines Fahrzeugs nach einem der vorstehenden Ansprüche, **dadurch gekennzeichnet, dass** die Dioden (4) mit ihren Kollimationsoptiken (5) sich in den Durchgangsöffnungen oder -bohrungen eines PVB befinden oder sich in den Durchgangsöffnungen oder -bohrungen oder einer funktionellen PVB/Folie befinden mit einer eventuellen funktionellen Beschichtung/PVB oder dadurch, dass die Durchgangsöffnung oder -bohrung für die Dioden gemeinsam vorgesehen ist und ein Abschnitt des Teils der Kollimationsoptik (5) einen Abstandshalter (56) zwischen den Dioden 4 bildet oder wobei ein Abstandshalter ein separates Teil des Teils der Kollimationsoptik ist.

15. Fahrzeug, aufweisend mindestens ein beleuchtetes Verbundglasschiebedach nach einem der vorstehenden Ansprüche.

16. Verfahren zur Herstellung eines Dachs nach einem der vorstehenden Ansprüche des Dachs, **dadurch gekennzeichnet, dass** es die folgenden Schritte aufweist:
- Schneiden einer Schicht aus PVB oder einer Verbundschicht aus PVB/funktioneller Kunststofffolie, wie PET, die eine eventuelle funktionelle Beschichtung bereitstellt oder aus PVB/funktioneller Kunststofffolie, wie PET, die eventuell eine funktionelle Beschichtung/PVB bereitstellt, mit einer Dicke von vorzugsweise höchstens 0,9 mm, um die eine oder die Durchgangsöffnungen vorzugsweise lokal zu schließen
- Zusammenfügen der Verbundverglasung mit den Dioden in einer oder den Öffnungen, die größer als die Größe der Dioden sind und gleich dem Umfeld oder Umfangserstreckung jeder Kollimationsoptik sind.

17. Verfahren zur Herstellung eines Dachs nach dem vorstehenden Anspruch, **dadurch gekennzeichnet, dass** die Diode oder die Dioden (4) Komponenten sind, die auf der Oberfläche, vorzugsweise auf der Seite, die vor der Seite F3 eines flexiblen Trägers der Diode ausgerichtet ist, montiert sind, insbesondere einer transparenten Kunststofffolie, mit der Vorderseite gegen die PVB Schicht, wobei der Träger der Dioden vorzugsweise über den Rand der Verbundverglasung hinausragt.

18. Verfahren zur Herstellung eines Dachs nach dem vorstehenden Anspruch, **dadurch gekennzeichnet, dass** die oder jede Kollimationsoptik eine texturierte Platte ist mit einem Netz aus zweidimensionalen Mustern oder einer prismatischen Anordnung, die ein erstes prismatisches Netz (5) auf der Seite F3 aufweist, die sich längs entlang einer Achse erstreckt, die insbesondere eine erste texturierte Platte ist, und ein zweites prismatisches Netz (5') aufweist, das mit dem ersten prismatischen Netz gekreuzt ist, die insbesondere eine zweite texturierte Platte ist.

## Claims

1. A luminous laminated glazed roof for a vehicle and in particular an automobile (1000), said roof comprising a laminated glazing including:
- a first transparent glazing (1), made of optionally tinted mineral glass, with main faces (11, 12) called faces F1 and F2; which glazing is intended to be the exterior glazing;
- a second transparent glazing (1') made of mineral glass, with main faces (13, 14) called faces F3 and F4, which glazing is intended to be the interior glazing;
- between the faces F2 and F3, which are the internal faces of the laminated glazing, an optionally tinted transparent lamination interlayer film (2, 20) made of polymeric material, this lamination interlayer film having a main face FA face F2 side and a main face FB face F3 side, face FA optionally making adhesive contact with face F2 and face FB optionally making adhesive contact with face F2; and
- a set of N >1 inorganic light-emitting diodes (4), each diode including at least one semiconductor chip (41), each diode being able to emit in the direction of the face F3, and having a front surface (40);
**characterized in that** said lamination interlayer is provided, between the face FA and the face FB, with one or a set of M apertures that are preferably through apertures (20a) or that form blind holes (20i);
**in that** each diode is associated with a through aperture or a blind hole housing the diode;
or **in that** at least one group of said diodes is associated with a given what is called common, through aperture or a given what is called common, blind hole housing the group of diodes;
**in that** the laminated glazing furthermore includes a set of collimating optics (5), each collimating and in particular transparent lens being associated with one what is called dedicated light-emitting diode (4) that is in the, preferably through, aperture, or associated with the group of light-emitting diodes that are in the common, preferably through, aperture and each collimating optics is arranged between the faces F2 and F3, with at least one functional portion between the front surface (40) and the face F3; and **in that** at least one or each collimating optics, having an entrance face (51) face F2 side and an exit face (52) face F3 side, includes:
- a) an array of two-dimensional motifs, exit face (52) side, in particular a plate textured with said array,
or
- b) a prismatic assembly including
- a first array of prismatic motifs (5), in particular a first textured plate, all of the motifs of the first array being prisms face F3 side extending longitudinally along a parallel direction or making an angle of at most 10° to the longitudinal edge face of the roof;
- and a second array of prismatic motifs (5'), in particular a second textured plate, which array is crossed with the first array of prismatic motifs, all of the motifs of the second array being prisms face F3 side extending longitudinally in a direction perpendicular to the longitudinal axis of the first prismatic array or making an angle of at most 90±10°.

2. The vehicular luminous laminated glazed roof as claimed in the preceding claim, **characterized in that** at least one or each collimating optics, in particular for a), includes a functional planar plate that is partially textured in its thickness, called the textured plate, which has the entrance face (51) oriented toward the face F2 facing the diode in the preferably through aperture or the group of diodes in the common, preferably through, aperture, and an exit face (52) oriented toward the textured face F3, this texture forming all of said motifs of submillimeter height and optionally **in that** for b) it includes a second planar functional plate that is partially textured in its thickness, called the textured plate, which includes a second entrance face oriented toward the exit face of the first plate, and said exit face oriented toward the face F3, is textured, this texture forming a set of motifs of submillimeter height, the second plate in particular being against the first plate, or even adhesively bonded to its periphery, and closer to face F3 or even making contact with face F3.

3. The vehicular luminous laminated glazed roof as claimed in one of the preceding claims, **characterized in that** at least one or each collimating optics is a part that is preferably monolithic for a), or that is made up of a plurality of united pieces in the preferably through aperture, which part is mounted on a diode carrier and/or mounted on the diode in the preferably through aperture or on a diode of the group of diodes, said part including:
- the functional portion of the collimating optics, in particular a textured plate for a) or, for b), a first textured plate and a second textured plate; and
- a peripheral extension (53), extending in the direction of the face F2 along the edge face of the diode or of at least one of the diodes of said group of diodes, and even making contact with said edge face of the diode, and better still being spaced apart by at most 2 mm or making contact with the lamination interlayer (21) and in particular a wall of the preferably through aperture.

4. The vehicular luminous laminated glazed roof as claimed in the preceding claim, **characterized in that** the peripheral extension (53) is a surround of the diode (4) or of the group of diodes and in particular makes contact with the preferably through aperture.

5. The vehicular luminous laminated glazed roof as claimed in the preceding claim, **characterized in that** the peripheral surround (53) comprises a housing for accommodating the diode or the group of diodes, the wall of the surround in particular including stubs for holding the diode or the group of diodes.

6. The vehicular luminous laminated glazed roof as claimed in one of the preceding claims, **characterized in that** the diodes are reverse-mount diodes, the face of a diode carrier face F3 side being textured and forming the collimating optics according to a) or a first textured plate of the collimating optics according to b) or **in that** the collimating optics comprises a textured plate and forms the collimating optics according to a) or a first textured plate of the collimating optics according to b), said textured plate being between the face of the lamination interlayer face F3 side and face F3 or being in the aperture.

7. The vehicular luminous laminated glazed roof as claimed in one of the preceding claims, **characterized in that** at least one or each collimating optics includes:
- a) said array of two-dimensional motifs, exit face (52) side, including a first textured plate;
or
- b) said prismatic assembly including said first prismatic array (5), in particular a first film or a first textured plate, all of the motifs of the first array being prisms face F3 side extending longitudinally along an axis or in a parallel direction or making an angle of at most 5° and even of at most 2° to the longitudinal edge face of the roof, and the second prismatic array (5'), in particular a second film or a second textured plate, which film is crossed with the first film, all of the motifs of the second array being prisms face F3 side extending longitudinally along a direction perpendicular to the longitudinal axis of the first prismatic array or making an angle of at most 90±10° or even at most 90±5° and even of 90±2°.

8. The vehicular luminous laminated glazed roof as claimed in one of the preceding claims, **characterized in that** the motifs are contiguous or essentially contiguous.

9. The vehicular luminous laminated glazed roof as claimed in one of the preceding claims, **characterized in that** the two-dimensional motifs, which are optionally truncated and in particular cones or pyramidal motifs, or prisms, have a half angle at the apex ranging from 35 to 55° and better still from 40° to 50°.

10. The vehicular luminous laminated glazed roof as claimed in one of the preceding claims, **characterized in that** the two-dimensional motifs, which are optionally truncated, and in particular cones or pyramidal motifs, are recessed.

11. The vehicular luminous laminated glazed roof as claimed in one of the preceding claims, **characterized in that** a flexible carrier called the diode carrier (3) is pressed against or adhesively bonded to face F2 or face F3, the diode(s) being reverse mounted, said diode carrier having a thickness e'2 that is at most 0.2 mm or at most 0.15 mm and even at most 0.1 mm and the diode carrier preferably extending beyond the edge face of the laminated glazed roof, and in particular including an optionally apertured diode-bearing first portion (31) and a narrower electrical-supply portion (32) that leads beyond the edge face of the roof.

12. The vehicular luminous laminated glazed roof as claimed in one of the preceding claims, **characterized in that** each diode is an electronic component (40) equipped with an in particular polymeric or ceramic peripheral package (42) encapsulating the edge face of the electronic component, said package in particular defining the edge face of the diode and in particular protruding from and surrounding the semiconductor chip, and preferably they are surface mount devices mounted on the front face of a diode carrier.

13. The vehicular luminous laminated glazed roof as claimed in one of the preceding claims, **characterized in that** diodes of said set form a reading light and are preferably in the through apertures and/or on a diode carrier between face F2 and face FA.

14. The vehicular luminous laminated glazed roof as claimed in one of the preceding claims, **characterized in that** the diodes (4) with their collimating optics (5) are in through or blind apertures of a PVB sheet or in blind or through apertures of a PVB sheet/functional film with an optional functional coating/PVB sheet or **in that** the blind or through aperture is common to diodes and a portion of the collimating optical part (5) forms a spacer (56) between the diodes 4 or a spacer is a part that is separate from the collimating optical part.

15. A vehicle including at least one luminous laminated glazed roof as claimed in any one of the preceding claims.

16. A process for manufacturing the roof as claimed in one of the preceding roof claims, **characterized in that** it includes the following steps:
- cutting a PVB sheet or a composite sheet consisting of a PVB sheet/film of functional plastic such as PET bearing an optional functional coating or of a PVB sheet/film of functional plastic such as PET bearing an optional functional coating/PVB sheet, of thickness of preferably at most 0.9 mm to form the one or more preferably local through apertures; and
- assembling the laminated glazing, with the diodes in one or more apertures that are larger than the size of the diodes and even than the surround or peripheral extension of each collimating optics.

17. The process for manufacturing the roof as claimed in the preceding claim, **characterized in that** the one or more diodes (4) are surface mount devices that are preferably mounted on what is called a front face, oriented face F3 side, of a flexible diode carrier, in particular a transparent plastic film, with the front face against the PVB sheet, the diode carrier preferably extending beyond the edge face of the laminated glazing.

18. The process for manufacturing the roof as claimed in one of the preceding process claims, **characterized in that** the or each collimating optics is a plate textured with an array of two-dimensional motifs or is a prismatic assembly including a first prismatic array (5) face F3 side extending longitudinally along an axis that in particular is a first textured plate, and including a second prismatic array (5') that is crossed with the first prismatic array and that is in particular a second textured plate.
